# EUROPEAN PATENT APPLICATION

(11) **EP 4 715 566 A1**
(43) Date of publication of application: **25.03.2026**
(21) Application number: 24835350.0
(22) Date of filing: 02.07.2024
(51) Int. Cl.: G06F 3/16

(54) **VOLUME ADJUSTMENT METHOD AND RELATED APPARATUS**

(30) Priority: 05.07.2023 CN 202310816585
(71) Applicant: Huawei Technologies Co., Ltd., Shenzhen, Guangdong 518129 (CN)
(72) Inventor: WANG, Yonghui, Shenzhen, Guangdong 518129 (CN); JIANG, Tiezhu, Shenzhen, Guangdong 518129 (CN); XU, Haibo, Shenzhen, Guangdong 518129 (CN); XING, Tianyi, Shenzhen, Guangdong 518129 (CN); BAI, Rubing, Shenzhen, Guangdong 518129 (CN); XING, Chong, Shenzhen, Guangdong 518129 (CN)
(74) Representative: MERH-IP Matias Erny Reichl Hoffmann Patentanwälte PartG mbB
(86) International application number: PCT/CN2024/103213
(87) International publication number: WO 2025/007869

(57) **Abstract**

This application discloses a volume adjustment method and a related apparatus. After an electronic device in a folded state receives a touch of a user on a volume button, the electronic device first sets functions of two volume buttons. For example, a function of the touched button is increasing volume, and a function of the other volume button is decreasing volume. In this way, the user only needs to complete volume control based on a latest function setting, without distinguishing between locations of the volume buttons. This facilitates adjustment of volume of the electronic device by the user, and improves user experience of the electronic device.

## Description

This application claims priority to Chinese Patent Application No. 202310816585.3, filed with the China National Intellectual Property Administration on July 5, 2023 and entitled "VOLUME ADJUSTMENT METHOD AND RELATED APPARATUS", which is incorporated herein by reference in its entirety.

### TECHNICAL FIELD

This application relates to the field of terminal technologies, and in particular, to a volume adjustment method and a related apparatus.

### BACKGROUND

With the development of screen technologies, displays of electronic devices become larger, to provide richer information for users and bring better use experience to the users. However, an excessively large display of an electronic device severely affects portability of the electronic device. In recent years, electronic devices configured with foldable screens (for example, foldable phones) have been released, providing not only large displays but also portability for users.

The electronic device usually has two volume buttons, and the two volume buttons can be used to adjust volume of the electronic device. When the electronic device is in an expanded state, the user can identify, based on locations of the volume buttons on the electronic device, functions corresponding to the volume buttons. However, when the electronic device is in a folded state, because the electronic device does not retain an elongated bar shape as in the expanded state, the user cannot determine an orientation of the electronic device in the folded state. In this case, when the user expects to adjust the volume of the electronic device, it is difficult for the user to determine the functions of the volume buttons, which increases difficulty for the user to adjust the volume, raises a probability of accidental touches, and severely affects use experience.

### SUMMARY

This application provides a volume adjustment method and a related apparatus. After receiving an input on a volume button, an electronic device sets functions of volume buttons of the electronic device, to resolve a problem that it is difficult to determine the function of the volume button.

According to a first aspect, this application provides a volume adjustment method, applied to an electronic device including a foldable screen, a first volume button, and a second volume button. A status of the electronic device includes an unexpanded state and an expanded state. The method includes: receiving a first input of a user on the first volume button; determining that the electronic device is in the unexpanded state; and setting the first volume button to a first function and setting the second volume button to a second function in response to the first input, where the first function and the second function are different. After receiving the input of the user on the volume button, the electronic device sets functions of the volume buttons. In this way, when the electronic device is in a folded state, the user can determine a function corresponding to the pressed volume button, and determine a function corresponding to the other volume button, without distinguishing between relative locations of the volume buttons. This facilitates adjustment of volume of the electronic device by the user. The volume adjustment method provided in this embodiment of this application can further facilitate adjustment of the volume of the electronic device by the user in a specified scenario. For example, the specified scenario may include but is not limited to a scenario in which the electronic device is placed in a bag or a pocket, a scenario such as an underground garage in which light intensity is low, a scenario in which the user runs or walks, and the like. In these specified scenarios, it is inconvenient for the user to view locations of the volume buttons and then adjust the volume of the electronic device. The volume adjustment method is used, so that the user sets functions of the volume buttons when it is inconvenient to view the locations of the volume buttons.

The unexpanded state may include a folded state of a device with a foldable screen that features planar folding, and may further include an unexpanded state of a device with a foldable screen that features rolling.

In a possible implementation, before setting the first volume button to the first function, the method further includes: determining that the electronic device is in a state of playing audio data. In this way, the electronic device can set the functions of the volume buttons only when determining that the audio data is being played, and adjust the volume of the electronic device, to avoid a case in which the volume of the electronic device is adjusted due to an accidental touch.

In a possible implementation, setting the first volume button to the first function and setting the second volume button to the second function in response to the first input, and the method further includes: performing the first function. In this way, when setting the functions of the volume buttons, the electronic device performs the function of the triggered volume button. This facilitates adjustment of the volume of the electronic device.

In a possible implementation, the method further includes: if the electronic device is in the unexpanded state, and a second input on the first volume button is received within first preset duration after the first input is received, performing the first function; or if the electronic device is in the unexpanded state, and a second input on the second volume button is received within first preset duration after the first input is received, performing the second function. In this way, the electronic device keeps the function of the first volume button and the function of the second volume button unchanged within the preset duration, and the user has determined the function of each volume button within the preset duration. This facilitates adjustment of the electronic device to appropriate volume.

In a possible implementation, the method further includes: if the electronic device does not receive a third input on the first volume button or the second volume button within second preset duration after the first input is received, setting the first volume button and the second volume button to default functions. In this way, if the electronic device does not receive the input of the user within the preset duration, the electronic device restores the first volume button and the second volume button to the default functions, to avoid affecting normal use of the volume buttons by the electronic device in the expanded state.

In a possible implementation, the method further includes: if the electronic device switches to the expanded state, setting the first volume button and the second volume button to default functions. In this way, when the electronic device is in the expanded state, the functions of the volume buttons are set to the default functions, to avoid affecting normal use of the volume buttons by the electronic device in the expanded state.

In a possible implementation, before setting the first volume button to the first function, the method further includes: detecting environment information; and determining the first function based on the environment information. In this way, the electronic device determines the function of the first volume button based on the environment information. When the environment information indicates that surroundings are noisy, the user is more inclined to increase the volume of the electronic device, and the electronic device sets the first volume button to increasing the volume of the electronic device. When the environment information indicates that surroundings are quiet, the user is more inclined to decrease the volume of the electronic device, and the electronic device sets the first volume button to decreasing the volume of the electronic device.

In a possible implementation, before setting the first volume button to the first function, the method further includes: detecting volume of the electronic device. Determining the first function based on the environment information is specifically: determining the first function based on the environment information and the volume. In this way, when the volume of the electronic device is high, and the environment information indicates that an environment is quiet, the electronic device sets the first volume button to a volume decrease function. When the volume of the electronic device is low, and the environment information indicates that an environment is noisy, the electronic device sets the first volume button to a volume increase function. When the volume of the electronic device is low and the environment information indicates that the environment is noisy, or when the volume of the electronic device is high and the environment information indicates that the environment is quiet, the electronic device determines, based on the volume of the electronic device and the environment information, that the function of the first volume button is increasing the volume of the electronic device or decreasing the volume of the electronic device respectively. The electronic device determines, based on the environment information and the volume, a function of the volume button that can better meet an intention of the user, to improve user experience.

In a possible implementation, the method further includes: obtaining volume commonly used by the user. Determining the first function based on the environment information and the volume specifically includes: determining the first function based on the environment information, the volume, and the volume commonly used by the user. In this way, when the environment information indicates that the environment is noisy, the volume of the electronic device is low, and the volume commonly used by the user is greater than the volume of the electronic device, the electronic device sets the first volume button to increasing the volume of the electronic device. When the environment information indicates that the environment is quiet, the volume of the electronic device is high, and the volume commonly used by the user is less than the volume of the electronic device, the electronic device sets the first volume button to decreasing the volume of the electronic device. The electronic device determines, based on the environment information, the volume, and the volume commonly used by the user, a function of the volume button that can better meet the intention of the user, to improve user experience.

When the electronic device cannot determine the function of the volume button based on the environment information, the volume of the electronic device, and the volume commonly used by the user, the electronic device determines the function of the volume button based on any one of the environment information, the volume of the electronic device, and the volume commonly used by the user. Alternatively, when the electronic device cannot determine the function of the volume button based on the environment information, the volume of the electronic device, and the volume commonly used by the user, the electronic device determines the function of the volume button based on a quantity of results. For example, when the environment information indicates to set the first volume button to increasing volume, the volume of the electronic device indicates to set the first volume button to decreasing volume, and the volume commonly used by the user indicates to set the first volume button to decreasing volume, a quantity of results of setting the first volume button to increasing volume is less than a quantity of results of setting the first volume button to decreasing volume, and the electronic device sets the function of the first volume button to decreasing volume. The electronic device separately determines functions of the volume button based on the environment information, the volume of the electronic device, and the volume commonly used by the user, and uses a function with a largest quantity in determining results as the function of the volume button. The determined function can better meet the intention of the user, to improve user experience.

In a possible implementation, before setting the first volume button to the first function, the method further includes: detecting volume of the electronic device; obtaining volume commonly used by the user; and determining the first function based on the volume of the electronic device and the volume commonly used by the user. The user is more inclined to listen to, at the volume commonly used by the user, a sound signal played by the electronic device. When the volume of the electronic device is greater than the volume commonly used by the user, the electronic device sets the function of the first volume button to decreasing volume. When the volume of the electronic device is less than the volume commonly used by the user, the electronic device sets the function of the first volume button to increasing volume. The electronic device determines, based on the volume of the electronic device and the volume commonly used by the user, a function of the volume button that can better meet the intention of the user, to improve user experience.

In a possible implementation, before setting the first volume button to the first function, the method further includes: detecting location information of the electronic device; and determining the first function based on the location information. In this way, the electronic device sets the functions of the volume buttons based on the location information. In different scenarios, the triggered volume button is set to a more appropriate function, to facilitate adjustment of the volume of the electronic device by the user in a plurality of scenarios.

In a possible implementation, the first function is increasing volume at which the first electronic device plays audio, and the second function is decreasing volume at which the first electronic device plays audio; or the first function is decreasing volume at which the first electronic device plays audio, and the second function is increasing volume at which the first electronic device plays audio. In this way, when the electronic device is in the folded state, the electronic device sets a function of a volume button receiving an input to increasing volume (or decreasing volume), so that each time the user presses a volume button, the user can determine a function of the volume button. This facilitates adjustment of the volume of the electronic device by the user during a touch on the electronic device.

According to a second aspect, this application provides an electronic device, including one or more processors and one or more memories. The one or more memories are coupled to the one or more processors. The one or more memories are configured to store computer program code. The computer program code includes computer instructions. When the one or more processors execute the computer instructions, the electronic device is enabled to perform the method in any one of the possible implementations of the first aspect.

According to a third aspect, an embodiment of this application provides a computer-readable storage medium, including computer instructions. When the computer instructions are run on an electronic device, the electronic device is enabled to perform the method in any one of the possible implementations of the first aspect.

### BRIEF DESCRIPTION OF DRAWINGS

FIG. 1A to FIG. 1C are diagrams of product forms of an electronic device with a foldable screen according to an embodiment of this application;
FIG. 2A to FIG. 2D are diagrams of volume buttons of an electronic device 100 according to an embodiment of this application;
FIG. 3 is a diagram of a hardware structure of an electronic device according to an embodiment of this application;
FIG. 4 is a schematic flowchart of a volume adjustment method according to an embodiment of this application;
FIG. 5 is a diagram of modules according to an embodiment of this application;
FIG. 6A to FIG. 6C are another schematic flowchart according to an embodiment of this application;
FIG. 7 is a diagram of a scenario according to an embodiment of this application;
FIG. 8A to FIG. 8C are diagrams of product forms of another electronic device with a foldable screen according to an embodiment of this application;
FIG. 9 is a schematic flowchart of another volume adjustment method according to an embodiment of this application; and
FIG. 10A and FIG. 10B are a schematic flowchart of another volume adjustment method according to an embodiment of this application.

### DESCRIPTION OF EMBODIMENTS

The following clearly describes technical solutions in embodiments of this application in detail with reference to accompanying drawings. In descriptions of embodiments of this application, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more.

The following describes a device with a foldable screen according to an embodiment of this application.

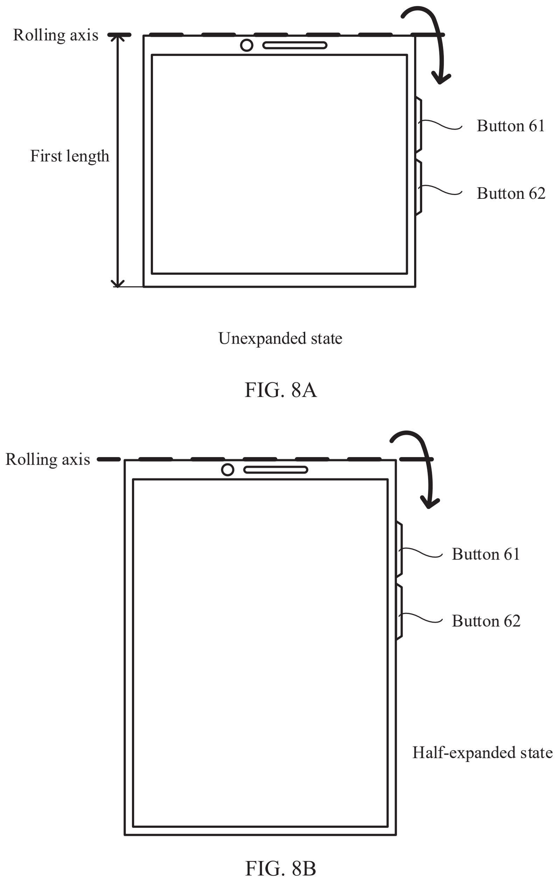

A display of an electronic device 100 is a foldable screen. A manner of folding the foldable screen may include but is not limited to planar folding, rolling, or the like. For a foldable screen that features rolling (briefly referred to as a rollable screen), refer to embodiments shown in FIG. 8A to FIG. 8C. Foldable screens that feature planar folding may be classified into two types in terms of folding manners. One type is a foldable screen that features outward folding (briefly referred to as an outward foldable screen), and the other type is a foldable screen that features inward folding (briefly referred to as an inward foldable screen). For example, the foldable screen that features planar folding may be folded (for example, the foldable screen that features planar folding may be folded along a folding edge or a folding axis) to form a first display and a second display. After the outward foldable screen is folded, the first display faces away from the second display. After the inward foldable screen is folded, the first display faces the second display.

A status of the foldable screen that features planar folding may be divided into a folded state and an expanded state. The expanded state includes a half-expanded state and a fully expanded state. When the foldable screen that features planar folding is in the folded state, the foldable screen that features planar folding may be folded into the first display and the second display. The foldable screen that features planar folding may be expanded from the folded state to the half-expanded state. When the foldable screen that features planar folding is in the half-expanded state, the foldable screen that features planar folding may continue to be expanded to the fully expanded state. When the foldable screen that features planar folding is in the fully expanded state, the foldable screen that features planar folding is a complete screen, including the first display and the second display. It should be noted that, the first display and the second display are two display areas of the foldable screen, or are two independent displays.

The foldable screen includes one or more buttons, and the one or more buttons include a volume button. The volume button may be disposed on a side edge of a body on which the first display or the second display of the foldable screen is located. When the status of the foldable screen changes, a location of the volume button also changes.

In this embodiment of this application, a value range of an included angle α between the first display and the second display of the foldable screen that features planar folding of the electronic device 100 is [0°, 180°]. If α∈[0°, P1], the electronic device 100 may determine that the foldable screen that features planar folding is in a fully folded state. If α∈(P1, P2), the electronic device 100 may determine that the foldable screen that features planar folding is in the half-expanded state. If α∈[P2, 180°], the electronic device 100 may determine that the foldable screen that features planar folding is in the fully expanded state. Herein, 0°<P1<P2<180°. P1 and P2 each may be a preset angle threshold. P1 and P2 may be determined based on habits of a large quantity of users using foldable screens that feature planar folding, or P1 and P2 may be set by a user on the electronic device 100.

In some examples, according to use habits of most users, when the included angle α between the first display and the second display is greater than 150 degrees, there is a high probability that the user expects to use the first display and the second display as a whole (that is, as a complete display), and the foldable screen that features planar folding is in the fully expanded state. When the included angle α between the first display and the second display is less than 30 degrees, there is a high probability that the user expects to use a display alone or fold away the electronic device 100, and the foldable screen that features planar folding may be in the folded state. When the included angle α between the first display and the second display falls within 30 degrees to 150 degrees, there is a high probability that the user expects to use the first display and the second display to display different display content, and the foldable screen that features planar folding may be in the half-expanded state.

Therefore, in this embodiment of this application, a value range of the preset angle threshold P1 may be (0°, 30°], and a value range of the preset angle threshold P2 may be [150°, 180°). For example, the preset angle threshold P1 may be 25°, and the preset angle threshold P2 may be 155°. The foregoing example is merely used to explain this application, and shall not constitute a limitation.

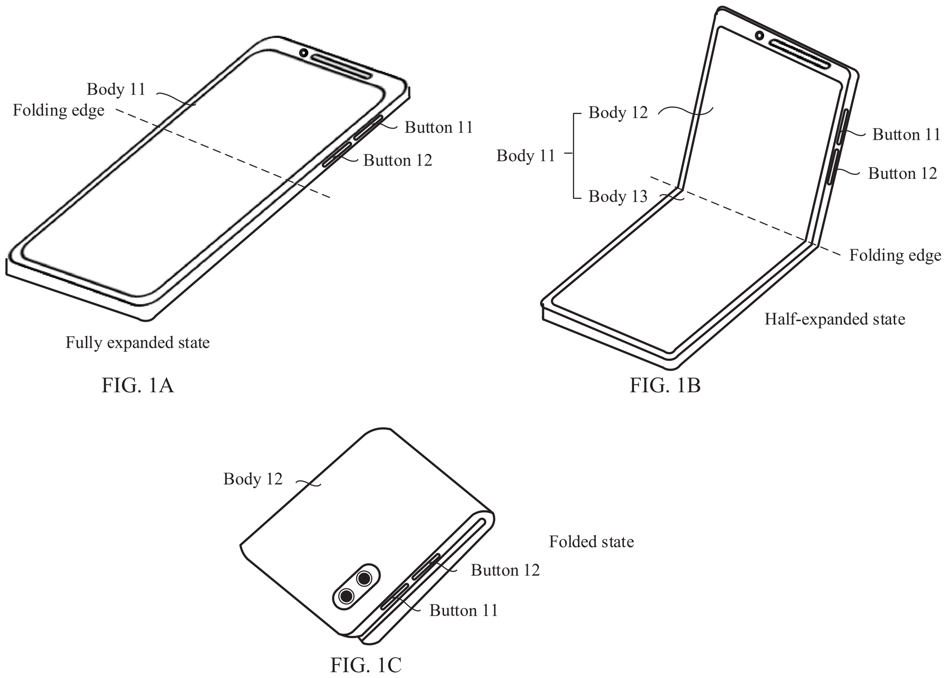

For example, FIG. 1A to FIG. 1C are diagrams of product forms of an electronic device 100 with an inward foldable screen according to an embodiment of this application. FIG. 1A shows the inward foldable screen in a fully expanded state. The inward foldable screen may be folded along a folding edge in a direction in which a first display and a second display face each other, to form the electronic device 100 in a half-expanded state shown in FIG. 1B. The inward foldable screen may continue to be folded along the folding edge, to form the inward foldable screen in a folded state shown in FIG. 1C. After the foldable screen of the electronic device 100 is fully folded, the first display and the second display face each other, and are invisible to a user.

As shown in FIG. 1A to FIG. 1C, the first display is located on a body 12, the second display is located on a body 13, and the body 12 and the body 13 jointly form a body 11. The body 12 of the electronic device 100 further includes a volume button, and the volume button includes a button 11 and a button 12. The button 11 and the button 12 may be configured to adjust volume of the electronic device 100. In some examples, the body 12 of the electronic device 100 may further include a power button. It may be understood that when the electronic device 100 includes a plurality of buttons, the plurality of buttons may be located on a same side or different sides of the electronic device 100. This is not limited in embodiments of this application.

In some examples, the electronic device 100 with the inward foldable screen provided in this embodiment of this application may further include a display, which may be referred to as a third display. The third display may be located on the back of the first display or the back of the second display. This is not limited in this application. When the user uses a rear-facing camera to take a photo or a video, an image captured by the rear-facing camera may be displayed on the third display. When the inward foldable screen is in the folded state, an interface (for example, time information) may be displayed on the third display.

It should be noted that, the electronic device 100 is not limited to including two volume buttons (for example, the button 11 and the button 12). The electronic device 100 may include only one volume button, the volume button includes two press switches, and the two press switches may be configured to adjust the volume of the electronic device 100.

It can be learned from FIG. 1A to FIG. 1C that, when the electronic device 100 is in the fully expanded state or the half-expanded state, the user may determine, based on locations of the button 11 and the button 12 on the body 11, that the button 11 may be configured to increase the volume of the electronic device 100 and the button 12 may be configured to decrease the volume of the electronic device 100. However, when the electronic device 100 is in the folded state, because a form of the electronic device 100 changes, the volume button is located in the middle of the electronic device 100, and the user cannot determine, based on the locations of the button 11 and the button 12, functions corresponding to the buttons.

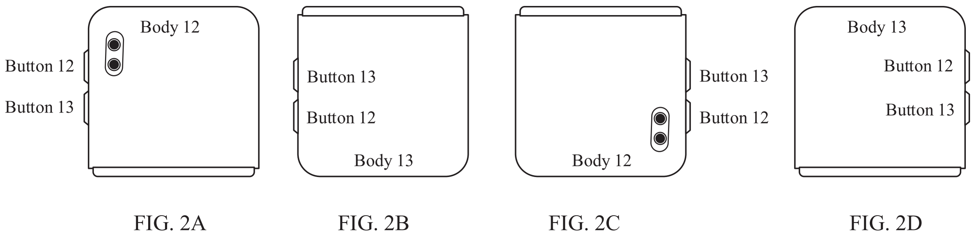

For example, as shown in FIG. 2A to FIG. 2D, the electronic device 100 is in the folded state, and when a posture of the electronic device 100 varies, the locations of the button 11 and the button 12 also vary correspondingly. The button 12 and the button 13 shown in FIG. 2A are located on a left side of the electronic device 100, and the button 12 is located above the button 13. The button 12 and the button 13 shown in FIG. 2B are also located on the left side of the electronic device 100, and the button 12 is located below the button 13. The button 12 and the button 13 shown in FIG. 2C are located on a right side of the electronic device 100, and the button 12 is located on below the button 13. The button 12 and the button 13 shown in FIG. 2D are also located on the right side of the electronic device 100, and the button 12 is located above the button 13. In this case, when the electronic device 100 is in the folded state, relative locations of the button 12 and the button 13 are uncertain, and the user cannot accurately determine a location of the volume button by a sense of touch. As a result, the user cannot accurately determine whether a function of the button is increasing volume or decreasing volume. When the user places the electronic device 100 in a bag or a pocket, the user needs to take out the electronic device 100 to determine the function of the volume button.

It should be noted that, the foldable screen of the electronic device 100 shown in FIG. 1A to FIG. 1C and FIG. 2A to FIG. 2D is an inward foldable screen. In embodiments of this application, the foldable screen of the electronic device 100 may alternatively be an outward foldable screen. Not limited to the foldable screen that is folded vertically shown in FIG. 1A to FIG. 1C, the foldable screen of the electronic device 100 may alternatively be a foldable screen that is folded horizontally. Not limited to the foregoing two-fold foldable screen that can be folded into two displays, the foldable screen of the electronic device 100 may alternatively be a threefold foldable screen that can be folded into three displays or a multi-fold foldable screen that can be folded into more displays. This is not limited in embodiments of this application.

It should be noted that, in embodiments of this application, at least two screens formed by folding the foldable screen may be a plurality of screens that exist independently, or may be a complete screen of an integrated structure, which is merely folded to form at least two parts.

For example, the foldable screen may be a flexible foldable screen, and the flexible foldable screen includes a folding edge made of a flexible material. The flexible foldable screen is partially or completely made of a flexible material. At least two screens formed by folding the flexible foldable screen are a complete screen of an integrated structure, which is merely folded to form at least two parts.

For another example, the foldable screen may be a multi-screen foldable screen. The multi-screen foldable screen may include a plurality of (two or more) screens. The plurality of screens are a plurality of separate displays. The plurality of screens may be connected sequentially through a folding axis. Each screen may rotate around a folding axis connected to the screen, to implement folding of the multi-screen foldable screen.

In a subsequent embodiment of this application, an example in which the foldable screen is a flexible foldable screen that can be folded vertically is used to describe the method provided in embodiments of this application. For example, the electronic device 100 in this embodiment of this application may be a device including the foregoing foldable screen, such as a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), or an augmented reality (Augmented reality, AR)/virtual reality (virtual reality, VR) device. A specific type of the electronic device 100 is not specifically limited in embodiments of this application.

The following describes a diagram of a hardware structure of an electronic device 100 according to an embodiment of this application.

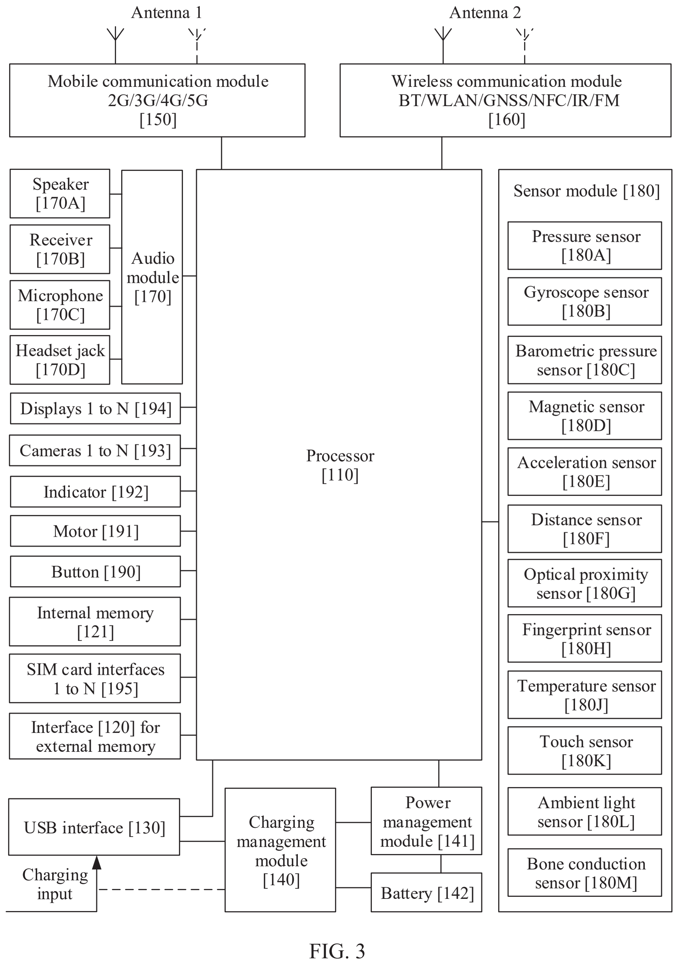

FIG. 3 is a diagram of a structure of an electronic device 100.

The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules that is shown in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. When charging the battery 142, the charging management module 140 may further supply power to the electronic device 100 by using the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 may include the foregoing foldable screen.

The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and the like of the image. The ISP may further optimize parameters such as exposure and a color temperature of a photographing scene. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform and the like on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, by referring to a mode of transfer between human brain neurons, and may further continuously perform self-learning. Applications such as intelligent cognition of the electronic device 100 may be implemented through the NPU, for example, image recognition, facial recognition, speech recognition, and text understanding.

The interface 120 for external memory may be configured to connect to an external non-volatile memory, to expand a storage capability of the electronic device 100. The external non-volatile memory communicates with the processor 110 through the interface 120 for external memory, to implement a data storage function. For example, files such as music and videos are stored in the external non-volatile memory.

The internal memory 121 may be configured to store computer-executable program code. The executable program code includes instructions. The processor 110 runs the instructions stored in the internal memory 121, to perform various function applications and data processing of the electronic device 100. The internal memory 121 may include a program storage area and a data storage area. The program storage area may store an operating system, an application required by at least one function (for example, a sound playing function or an image playing function), and the like. The data storage area may store data (for example, audio data and a phone book) created during use of the electronic device 100, and the like. In addition, the internal memory 121 may include a high-speed random access memory, or may include a non-volatile memory, for example, at least one magnetic disk storage device, a flash storage device, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like. The audio module 170 is configured to convert digital audio information into an analog audio signal for output, and is also configured to convert an analog audio input into a digital audio signal. The speaker 170A, also referred to as a "loudspeaker", is configured to convert an audio electrical signal into a sound signal. The receiver 170B, also referred to as an "earpiece", is configured to convert an audio electrical signal into a sound signal. The microphone 170C, also referred to as a "mike" or a "mic", is configured to convert a sound signal into an electrical signal.

The pressure sensor 180A is configured to sense a pressure signal, and may convert the pressure signal into an electrical signal. In some embodiments, the pressure sensor 180A may be disposed on the display 194.

The gyroscope sensor 180B may be configured to determine a motion posture of the electronic device 100. In some embodiments, an angular velocity of the electronic device 100 around three axes (namely, axes x, y, and z) may be determined by using the gyroscope sensor 180B.

In this embodiment of this application, the display 194 of the electronic device 100 may be folded to form a plurality of screens. The gyroscope sensor 180B may be disposed in the plurality of screens, and is configured to measure an orientation (that is, a direction vector of the orientation) of a corresponding screen. The electronic device 100 may determine an included angle between adjacent displays (for example, an included angle α between a first display and a second display) based on a change in an orientation angle of each screen measured by the gyroscope sensor 180B. The electronic device 100 may determine, based on the included angle between the adjacent displays, whether the electronic device 100 is in a folded state.

In some examples, the gyroscope sensor 180B may be a virtual gyroscope sensor formed by cooperation of a plurality of other sensors, and the virtual gyroscope sensor may be configured to calculate an included angle between adjacent screens of a foldable screen.

In some examples, one or more acceleration sensors 180E may be disposed in a plurality of screens of the electronic device 100, and the electronic device 100 may measure, by using the acceleration sensor 180E, an included angle between adjacent displays in a plurality of displays formed by folding. For example, one acceleration sensor 180E may be disposed in each screen of the foldable screen. The electronic device 100 (for example, the processor 110) may measure, by using the acceleration sensor 180E, a motion acceleration when each screen is rotated; and then calculate, based on the measured motion acceleration, an angle at which one screen rotates relative to another screen, for example, the included angle α between the first display and the second display. The electronic device 100 may determine, based on the included angle between the adjacent displays, whether the electronic device 100 is in the folded state.

In some examples, the display 194 of the electronic device 100 may be folded to form a plurality of screens. The magnetic sensor 180D may be disposed in the plurality of screens, and the electronic device 100 may detect, by using the magnetic sensor 180D, whether the electronic device 100 is folded. The magnetic sensor 180D includes a Hall sensor.

In some examples, an angle sensor is installed on a folding part (for example, a rotating shaft) of a foldable screen of the electronic device 100, and the electronic device 100 may measure an included angle between adjacent displays by using the angle sensor disposed on the folding part of the foldable screen. The electronic device 100 may determine, based on the included angle between the adjacent displays, whether the electronic device 100 is in the folded state.

In some examples, the electronic device 100 may be provided with one or more of the foregoing sensors, and the electronic device 100 may determine, by jointly using the sensors, whether the electronic device 100 is in the folded state.

The barometric pressure sensor 180C is configured to measure barometric pressure. The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer. In this embodiment of this application, the acceleration sensor 180E may be configured to detect whether a posture of the electronic device 100 changes.

The optical proximity sensor 180G may also be used in a smart cover mode or a pocket mode to automatically perform screen unlocking or locking. The ambient light sensor 180L is configured to sense ambient light brightness. The fingerprint sensor 180H is configured to collect a fingerprint. The temperature sensor 180J is configured to detect a temperature. The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may alternatively be disposed on a surface of the electronic device 100 at a location different from that of the display 194. The bone conduction sensor 180M may obtain a vibration signal.

The button 190 includes a power button, a volume button, and the like. The button 190 may be a mechanical button, or may be a touch button. The electronic device 100 may receive a button input, and generate a button signal input related to a user setting and function control of the electronic device 100. The volume button may include a volume button configured to increase volume and a volume button configured to decrease volume, or the volume button includes two press switches: a press switch configured to increase volume and a press switch configured to decrease volume. The volume button may be located on a side surface of a body of the electronic device 100.

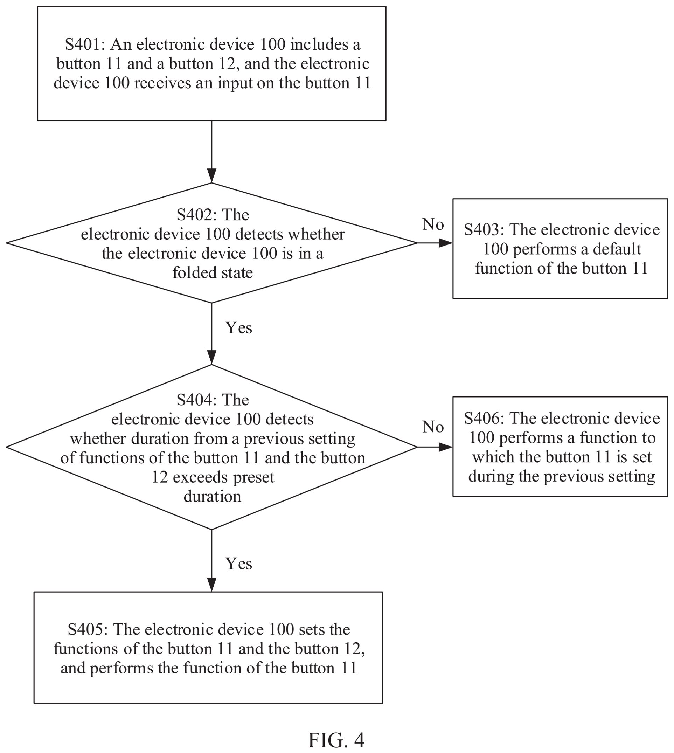

In this embodiment of this application, the processor 110 may be configured to process data collected by the foregoing sensor, to determine whether the electronic device 100 is in the folded state. When the electronic device 100 is in the folded state, the processor 110 may be further configured to set a function of the volume button of the electronic device 100. Specifically, for specific descriptions of setting the function of the volume button by the electronic device 100, refer to the embodiment shown in FIG. 4. Details are not described herein.

The motor 191 may generate a vibration prompt. The indicator 192 may be an indicator light, and may be configured to indicate a charging status and a power change, or may be configured to indicate a message, a missed call, a notification, and the like. The SIM card interface 195 is configured to connect to a SIM card.

All methods in the following embodiments may be implemented on the electronic device 100 having the foregoing hardware structure.

Embodiments of this application describe a volume adjustment method. An electronic device 100 includes two volume buttons. When the electronic device 100 is in a folded state, the electronic device 100 receives an input (for example, a press input) of a user on any volume button. In response to the input, within preset duration (for example, 5 minutes), the electronic device 100 may set the volume button receiving the input of the user to decreasing volume of the electronic device 100, and set the other volume button to increasing the volume of the electronic device 100. The electronic device 100 may further decrease the volume of the electronic device 100. Alternatively, in response to the input, within the preset duration, the electronic device 100 may set the volume button receiving the input of the user to increasing the volume of the electronic device 100, and set the other volume button to decreasing the volume of the electronic device 100. The electronic device 100 may further increase the volume of the electronic device 100.

In this way, when the electronic device 100 is in the folded state, the user can determine a function corresponding to the pressed volume button, and determine a function corresponding to the other volume button, without distinguishing between relative locations of the volume buttons, so that the user can adjust the volume of the electronic device 100 more conveniently. The volume adjustment method provided in embodiments of this application can further facilitate adjustment of the volume of the electronic device 100 by the user in a specified scenario. For example, the specified scenario may include but is not limited to a scenario in which the electronic device 100 is placed in a bag or a pocket, a scenario such as an underground garage in which light intensity is low, a scenario in which the user runs or walks, and the like.

It should be noted that, the electronic device 100 with a foldable screen that features planar folding is used as an example herein to describe the volume adjustment method provided in embodiments of this application. Not limited to being applied to a foldable screen that features planar folding, the volume adjustment method provided in embodiments of this application may also be applied to a device with a foldable screen that features rolling. When the volume adjustment method provided in embodiments of this application is applied to the device with the foldable screen that features rolling, the folded state is an unexpanded state of the device with the foldable screen that features rolling. The device with the foldable screen that features rolling may set a function of a volume button with reference to the volume adjustment method provided in embodiments of this application.

It should be further noted that, in embodiments of this application, an unexpanded state may include a folded state of a device with a foldable screen that features planar folding (for example, as shown in FIG. 1C), an unexpanded state of a device with a foldable screen that features rolling (for example, as shown in FIG. 8A), and the like.

It should be noted that, when the electronic device 100 is in an expanded state, the volume buttons of the electronic device 100 are in a default state. In the default state, a volume button that is closer to a front-facing camera of the electronic device 100 (for example, the button 11 shown in FIG. 1A to FIG. 1C) is configured to increase the volume of the electronic device 100, and the other volume button (for example, the button 12 shown in FIG. 1A to FIG. 1C) is configured to decrease the volume of the electronic device 100.

After the electronic device 100 in the folded state receives the input of the user, within the preset duration, the electronic device may set the volume button pressed by the user to increasing the volume, and set the other volume button to decreasing the volume. After the preset duration, the electronic device 100 cancels the setting of the functions corresponding to the volume buttons. After the preset duration, after the electronic device 100 in the folded state receives an input of the user on a volume button, within preset duration after the input is received, the electronic device may set the pressed volume button to increasing the volume, and set the other volume button to decreasing the volume, and so on.

Alternatively, after the electronic device 100 in the folded state receives the input of the user, within the preset duration, the electronic device may set the volume button pressed by the user to decreasing the volume, and set the other volume button to increasing the volume. After the preset duration, the electronic device 100 cancels the setting of the functions corresponding to the volume buttons. After the preset duration, after the electronic device 100 in the folded state receives an input of the user on a volume button, within preset duration after the input is received, the electronic device may set the pressed volume button to decreasing the volume, and set the other volume button to increasing the volume, and so on.

After the electronic device is in the expanded state, the electronic device 100 may set the volume buttons to the default state. In this way, when the electronic device 100 is in the expanded state, the user can normally use the volume buttons. When the electronic device 100 is in the folded state, the user can directly determine a function corresponding to a pressed volume button, without paying attention to locations of the volume buttons.

Specifically, as shown in FIG. 4, the volume adjustment method includes the following steps.

S401: An electronic device 100 includes a button 11 and a button 12, and the electronic device 100 receives an input on the button 11.

The input operation on the button 11 may be a press input, a tap input, or the like. The button 11 and the button 12 may be configured to adjust volume of the electronic device 100.

The electronic device 100 may play audio data and video data by using a speaker of the electronic device 100. In other words, the electronic device 100 may be in a scenario of playing an audio file or a video file (for example, playing music, playing a video, playing game background music, or playing game sound effect). Alternatively, the electronic device 100 establishes a call connection to an electronic device, and the electronic device 100 may be in a call scenario. The button 11 and the button 12 may be configured to adjust volume at which the electronic device 100 plays audio.

In some examples, the electronic device 100 may establish a communication connection (for example, a Bluetooth connection or a wired connection) to an electronic device 200. The electronic device 100 may send audio data to the electronic device 200 through the communication connection, and play the audio by using the electronic device 200. The button 11 and the button 12 may be configured to adjust volume at which the electronic device 200 plays audio.

S402: The electronic device 100 detects whether the electronic device 100 is in a folded state.

When detecting that the electronic device 100 is in the folded state, the electronic device 100 may perform step S404. When detecting that the electronic device 100 is not in the folded state (for example, is in an expanded state), the electronic device 100 may perform step S403.

The electronic device 100 may detect, by using one or more sensors, whether the electronic device 100 is in the folded state. For example, the electronic device 100 may be configured with a gyroscope on each folding part, and calculate an included angle between adjacent folding parts based on data collected by different gyroscopes, to determine whether the electronic device 100 is in the folded state. For another example, the electronic device 100 may be configured with a sensor (for example, an angle sensor) on a folding edge or a folding axis, to detect whether the electronic device 100 is in the folded state. In some examples, the electronic device 100 may alternatively determine, by using a magnetic sensor (for example, a Hall sensor), whether the electronic device is in the folded state, or the like. For details, refer to the embodiment shown in FIG. 3. Details are not described herein again.

In some examples, when a folding status changes, the electronic device 100 may record whether the electronic device 100 is in the folded state. For example, the electronic device 100 may set a folding flag bit. When switching from the folded state to the expanded state, the electronic device 100 may set the folding flag bit to a first value. When switching from the expanded state to the folded state, the electronic device 100 may set the folding flag bit to a second value. The first value is different from the second value. For example, the first value may be 0, and the second value may be 1. In this way, when detecting that a volume button is pressed, the electronic device 100 can directly determine the folding status of the electronic device 100 based on the folding flag bit, which is more efficient.

S403: The electronic device 100 performs a default function of the button 11.

Functions of the button 11 and the button 12 of the electronic device 100 in the expanded state are default functions. If the electronic device 100 determines, after receiving the input on the button 11, that the electronic device 100 is not in the folded state, the electronic device may perform the default function of the button 11. If the electronic device 100 determines, after receiving an input on the button 12, that the electronic device 100 is not in the folded state, the electronic device may perform the default function of the button 12.

For example, the default function of the button 11 is a function of increasing playing volume of the electronic device 100, and the default function of the button 12 is a function of decreasing playing volume of the electronic device 100. In this case, if the electronic device 100 determines, after receiving an input of pressing the button 11 by a user, that the electronic device 100 is in the expanded state, the electronic device may directly increase volume at which the electronic device 100 plays audio. If the electronic device 100 determines, after receiving an input operation of the user on the button 12, that the electronic device 100 is in the expanded state, the electronic device may directly decrease volume at which the electronic device 100 plays audio.

S404: The electronic device 100 detects whether duration from a previous setting of functions of the button 11 and the button 12 exceeds preset duration.

The preset duration may indicate valid duration for which the electronic device 100 in the folded state keeps the setting of the volume buttons. A value of the preset duration of the electronic device 100 is a preset value, for example, 2 minutes. Within the preset duration, the functions of the volume buttons of the electronic device 100 remain unchanged.

For example, when the electronic device 100 is in the folded state, upon receiving a press input of the user on a volume button, the electronic device 100 may set the functions corresponding to the volume buttons, and set a timer. When the electronic device 100 in the folded state receives a press input of the user on a volume button again, if duration recorded by the timer is less than the preset duration, the electronic device 100 keeps the functions of the volume buttons unchanged. If the duration recorded by the timer of the electronic device 100 is greater than or equal to the preset duration, the electronic device 100 may reset the functions of the volume buttons.

In some examples, after setting the timer in the folded state, the electronic device 100 may not receive, for a long time, an input of pressing a volume button by the user. In this case, when the duration recorded by the timer of the electronic device 100 is equal to the preset duration, the electronic device 100 may cancel the timer, and set the electronic device 100 to exceeding the preset duration. In this way, the electronic device 100 may not need to keep timing after the preset duration is exceeded, to reduce power consumption required for timing.

For another example, when receiving a press input of the user on a volume button again, the electronic device 100 may set the functions corresponding to the volume buttons, and record a current time point. When the electronic device 100 in the folded state receives a press input of the user on a volume button again, if a difference between a time point at which the press operation is received and the recorded time point is less than the preset duration, the electronic device 100 keeps the functions of the volume buttons unchanged. If the difference between the time point at which the press operation is received and the recorded time point is greater than or equal to the preset duration, the electronic device 100 may reset the functions of the volume buttons. It should be noted that, the descriptions, provided in this embodiment of this application, of how the electronic device 100 determines whether the preset duration is exceeded are merely examples. The electronic device 100 may further determine, by using another method, whether the preset duration is exceeded. This is not limited in embodiments of this application.

Specifically, when detecting that the preset duration is exceeded, the electronic device 100 may perform step S405. When detecting that the preset duration is not exceeded, the electronic device 100 may perform step S406.

It should be noted that, a start time point used to determine whether the preset duration is exceeded is not limited to a time point at which the functions of the volume buttons are set, and the start time point used to determine whether the preset duration is exceeded may alternatively be a time point at which the electronic device 100 receives, within the preset duration, an input of pressing a volume button by the user. For example, after the electronic device 100 in the folded state sets the function of the button 1 to increasing volume at which the electronic device 100 plays audio and sets the function of the button 2 to decreasing volume at which the electronic device 100 plays audio, when the electronic device 100 receives an input of the user on a volume button again within the preset duration, the electronic device 100 may determine the functions of the volume buttons based on the previous setting, and keep the setting of the volume buttons within preset duration after the input of the user on the volume button is received again. In this way, the electronic device 100 may record a time point at which the user presses a volume button for the last time, to determine whether the preset duration is exceeded.

In some examples, after receiving an input of the user on a volume button, the electronic device 100 may first detect whether the preset time is exceeded. When detecting that the preset duration is not exceeded, the electronic device 100 may perform step S406. When the electronic device 100 detects that the preset duration is exceeded, the electronic device 100 may detect whether the electronic device 100 is in the folded state. When the electronic device 100 detects that the electronic device 100 is in the folded state, the electronic device 100 may perform step S405. When the electronic device 100 detects that the electronic device 100 is not in the folded state, the electronic device 100 may perform step S403.

Alternatively, the electronic device 100 may simultaneously detect whether the electronic device 100 is in the folded state and whether the preset duration is exceeded. When the electronic device 100 detects that the electronic device 100 is not in the folded state and the preset duration is exceeded, the electronic device 100 may perform step S403. When the electronic device 100 detects that the electronic device 100 is in the folded state and the preset duration is exceeded, the electronic device 100 may perform step S405. When the electronic device 100 detects that the electronic device 100 is in the folded state and the preset duration is not exceeded, the electronic device 100 may perform step S406.

S405: The electronic device 100 sets the functions of the button 11 and the button 12, and performs the function of the button 11.

Specifically, the electronic device 100 may set the function of the button 11 to a volume increase function, to increase volume at which the electronic device 100 plays audio, and set the function of the button 12 to a volume decrease function, to decrease volume at which the electronic device 100 plays audio. Alternatively, the function of the button 11 is set to a volume decrease function, and the function of the button 12 is set to a volume increase function. In this way, the user can directly determine the functions of the volume buttons, without viewing locations of the volume buttons of the electronic device 100.

When the electronic device 100 detects that the duration from the previous setting of the functions of the button 11 and the button 12 exceeds the preset duration, the electronic device 100 may reset the functions of the volume buttons.

In some examples, by default, the electronic device 100 may set a function of a pressed volume button to decreasing volume at which the electronic device 100 plays audio, and set a function of the other volume button to increasing volume at which the electronic device 100 plays audio. Alternatively, by default, the electronic device 100 may set the function of the pressed volume button to increasing volume at which the electronic device 100 plays audio, and set the function of the other volume button to decreasing volume at which the electronic device 100 plays audio.

In some examples, the electronic device 100 may provide a setting interface used to set the functions of the volume buttons in the folded state. A plurality of function options for the functions of the volume buttons of the electronic device 100 may be set in the interface, and the plurality of function options include a volume increase option and a volume decrease option. The function option may be used to set a function of a volume button pressed in the folded state. The volume increase option indicates the electronic device 100 to set the function of the pressed volume button to a volume increase function. The volume decrease option indicates the electronic device 100 to set the function of the pressed volume button to a volume decrease function. In this way, the electronic device 100 may set the functions of the volume buttons of the electronic device 100 in the folded state according to an intention of the user.

In some examples, the electronic device 100 may obtain environment information, and set the functions of the volume buttons based on the environment information. The environment information may include but is not limited to ambient volume, ambient light intensity, and the like.

The electronic device 100 may collect a nearby sound (that is, ambient volume) by using a microphone, and then determine a function of a triggered volume button based on intensity of the ambient volume. When the intensity of the nearby sound is strong, the electronic device 100 sets the function of the triggered volume button to increasing volume at which the electronic device 100 plays audio, and sets a function of the other volume button to decreasing volume at which the electronic device 100 plays audio. When the intensity of the nearby sound is weak, the electronic device 100 sets the function of the triggered volume button to decreasing volume at which the electronic device 100 plays audio, and sets the function of the other volume button to increasing volume at which the electronic device 100 plays audio. For example, when detecting that the intensity of the ambient volume is higher than a first sound intensity threshold (for example, 45 decibels), the electronic device 100 sets the function of the triggered volume button to increasing volume at which the electronic device 100 plays audio, and sets the function of the other volume button to decreasing volume at which the electronic device 100 plays audio. When detecting that the intensity of the ambient volume is lower than a second sound intensity threshold (for example, 30 decibels), the electronic device 100 sets the function of the triggered volume button to decreasing volume at which the electronic device 100 plays audio, and sets the function of the other volume button to increasing volume at which the electronic device 100 plays audio. In this way, the electronic device 100 may set the function of the pressed volume button based on sound intensity of a surrounding environment. When surroundings are noisy, the user is more inclined to increase the volume of the electronic device 100. When surroundings are quiet, the user is more inclined to decrease the volume of the electronic device 100.

The electronic device 100 may obtain nearby light intensity (that is, ambient light intensity) by using a sensor (for example, an ambient light sensor). The electronic device 100 may determine a function of a triggered volume button based on the ambient light intensity. For example, when detecting that the ambient light intensity is greater than a first light intensity threshold, the electronic device 100 sets the function of the triggered volume button to increasing volume at which the electronic device 100 plays audio, and sets a function of the other volume button to decreasing volume at which the electronic device 100 plays audio. When detecting that the ambient light intensity is less than the first light intensity threshold (for example, 15 lux), the electronic device 100 sets the function of the triggered volume button to decreasing volume at which the electronic device 100 plays audio, and sets the function of the other volume button to increasing volume at which the electronic device 100 plays audio. In this way, the electronic device 100 may set the function of the pressed volume button based on light intensity of a surrounding environment. When surroundings are bright, the surroundings are usually noisy, and the user is more inclined to increase the volume of the electronic device 100. When surroundings are dark, the surroundings are usually quiet, and the user is more inclined to decrease the volume of the electronic device 100.

It should be noted that, the electronic device 100 may determine the functions of the volume buttons of the electronic device 100 based on the ambient volume and/or the ambient light intensity. When the electronic device 100 determines the functions of the volume buttons of the electronic device 100 based on the ambient volume and the ambient light intensity, if a function of a triggered volume button determined by the electronic device 100 based on the ambient volume is different from a function of the triggered volume button determined based on the ambient light intensity, the electronic device 100 may set the functions of the volume buttons based on only the ambient volume or the ambient light intensity.

In some other examples, the electronic device 100 may determine a function of a pressed volume button based on location information. For example, when determining, based on the location information, that the electronic device is in a noisy scene such as a station or a main road, the electronic device 100 sets the function of the pressed volume button to increasing volume at which the electronic device 100 plays audio, and sets a function of the other volume button to decreasing volume at which the electronic device 100 plays audio. When determining, based on the location information, that the electronic device is in a quiet scene such as a room or a park, the electronic device 100 sets the function of the pressed volume button to decreasing volume at which the electronic device 100 plays audio, and sets the function of the other volume button to increasing volume at which the electronic device 100 plays audio.

In some other examples, after receiving an input of the user on a volume button, the electronic device 100 may determine a function of the pressed volume button based on volume at which the electronic device 100 plays audio. When volume at which the electronic device 100 plays audio is high, the electronic device 100 sets the function of the pressed volume button to decreasing volume at which the electronic device 100 plays audio, and sets a function of the other volume button to increasing volume at which the electronic device 100 plays audio. When volume at which the electronic device 100 plays audio is low, the electronic device 100 sets the function of the pressed volume button to increasing volume at which the electronic device 100 plays audio, and sets the function of the other volume button to decreasing volume at which the electronic device 100 plays audio. For example, when volume at which the electronic device 100 plays audio is greater than a first volume threshold (for example, 60%), the function of the pressed volume button is set to decreasing volume at which the electronic device 100 plays audio, and the function of the other volume button is set to increasing volume at which the electronic device 100 plays audio. When volume at which the electronic device 100 plays audio is less than a second volume threshold (for example, 40%), the function of the pressed volume button is set to increasing volume at which the electronic device 100 plays audio, and the function of the other volume button is set to decreasing volume at which the electronic device 100 plays audio. In this way, the electronic device 100 may set the function of the pressed volume button based on the volume of the electronic device 100. When volume at which the electronic device 100 plays audio is high, the user is more inclined to decrease the volume of the electronic device 100. When volume at which the electronic device 100 plays audio is low, the user is more inclined to increase the volume of the electronic device 100.

In some examples, the first volume threshold may be volume commonly used by the user. When duration for which the electronic device 100 plays audio data at a volume value exceeds preset duration, the volume value may be set to the volume commonly used by the user (namely, the first volume threshold). Alternatively, the electronic device 100 may use a volume value with longest playing duration in most recent duration (for example, 24 hours) as the volume commonly used by the user.

In some examples, the electronic device 100 may set the functions of the volume buttons of the electronic device 100 based on one or more of the following factors: the ambient volume, the ambient light intensity, the volume of the electronic device 100, the first volume threshold, the location information, and the like. When the electronic device 100 determines the functions of the volume buttons of the electronic device 100 based on the one or more factors, if functions of a triggered volume button that are determined by the electronic device 100 based on the one or more factors are different, the electronic device 100 may set the functions of the volume buttons based on only one factor.

The electronic device 100 may set the functions of the volume buttons, and perform the function of the pressed volume button. In this way, when setting the functions of the volume buttons of the electronic device 100, the user also triggers a function of a volume button, to adjust the volume of the electronic device 100. This avoids a case in which the electronic device 100 does not adjust the volume of the electronic device 100 after the electronic device 100 receives an input of the user on the volume button, and the user cannot determine whether the volume button is successfully triggered, causing poor user experience. Herein, the button 11 of the electronic device 100 is pressed, and the electronic device 100 may further perform the function of the button 11 after setting the function of the button 11. It may be understood that, if the pressed volume button herein is the button 12, the electronic device 100 may also set the functions of the button 12 and the button 11 according to the foregoing descriptions. Optionally, the electronic device 100 may further trigger the function of the button 12.

In some examples, after receiving an input of the user on a volume button, the electronic device 100 may only set the functions of the two volume buttons, and does not adjust the volume of the electronic device 100. After receiving an input on a volume button again within preset duration after the functions of the volume buttons are set, the electronic device 100 adjusts the volume of the electronic device 100 based on a function corresponding to the volume button. In this way, the user may first set the functions of the volume buttons by pressing a volume button, and then press a corresponding volume button according to a requirement.

S406: The electronic device 100 performs a function to which the button 11 is set during the previous setting.

When the electronic device 100 detects that the duration from the previous setting of the functions of the button 11 and the button 12 does not exceed the preset duration, the volume buttons of the electronic device 100 are still set to the corresponding functions. The electronic device 100 may directly determine a function corresponding to a volume button, and trigger the function of the volume button. Herein, the electronic device 100 receives an input on the button 11, and the electronic device 100 performs the function to which the button 11 is set during the previous setting. It may be understood that, if the electronic device 100 receives an input on the button 12, the electronic device 100 may perform a function to which the button 12 is set during the previous setting.

Specifically, if the electronic device 100 in the folded state sets the button 11 to a volume increase function and sets the button 12 to a volume decrease function before the electronic device 100 receives the input on the button 11, when the electronic device 100 detects that the preset duration is not exceeded, the setting of the button 11 and the button 12 remains unchanged. In other words, the function of the button 11 is the volume increase function, and the function of the button 12 is the volume decrease function. When receiving the input on the button 11, the electronic device 100 may increase volume at which the electronic device 100 plays audio.

Similarly, if the electronic device 100 in the folded state sets the button 11 to a volume decrease function and sets the button 12 to a volume increase function before the electronic device 100 receives the input on the button 11, when the electronic device 100 detects that the preset duration is not exceeded, the setting of the button 11 and the button 12 remains unchanged. In other words, the function of the button 11 is the volume decrease function, and the function of the button 12 is the volume increase function. When receiving the input on the button 11, the electronic device 100 may decrease volume at which the electronic device 100 plays audio.

In this way, the user can directly determine the functions corresponding to the volume buttons, without determining locations of the volume buttons of the electronic device 100 in the folded state. This facilitates adjustment of the volume of the electronic device 100.

In some examples, after a posture of the electronic device 100 changes, locations of the volume buttons may also change. As shown in FIG. 2A to FIG. 2D, locations of the volume buttons vary with postures of the electronic device 100. Therefore, after the electronic device 100 in the folded state sets the functions corresponding to the volume buttons, when the posture of the electronic device 100 changes, even if the preset duration is not exceeded, the electronic device 100 needs to reset the functions of the volume buttons after receiving an input of the user on a volume button.

In some examples, after the electronic device 100 cancels a setting of the functions corresponding to the volume buttons, the volume buttons of the electronic device 100 are not set to corresponding functions, and the electronic device 100 may set the volume buttons to the default functions. Alternatively, after the preset duration, the electronic device 100 may retain the setting of the volume buttons.

It should be noted that, in the embodiment shown in FIG. 4, a device with a foldable screen that features planar folding is used as an example to describe the volume adjustment method. Not limited to being applied to the foldable screen that features planar folding, the volume adjustment method may also be applied to a device with a foldable screen that features rolling. When the volume adjustment method shown in FIG. 4 is applied to the device with the foldable screen that features rolling, the folded state shown in FIG. 4 corresponds to an unexpanded state of the device with the foldable screen that features rolling.

The following describes a software module of an electronic device 100 provided in an embodiment of this application.

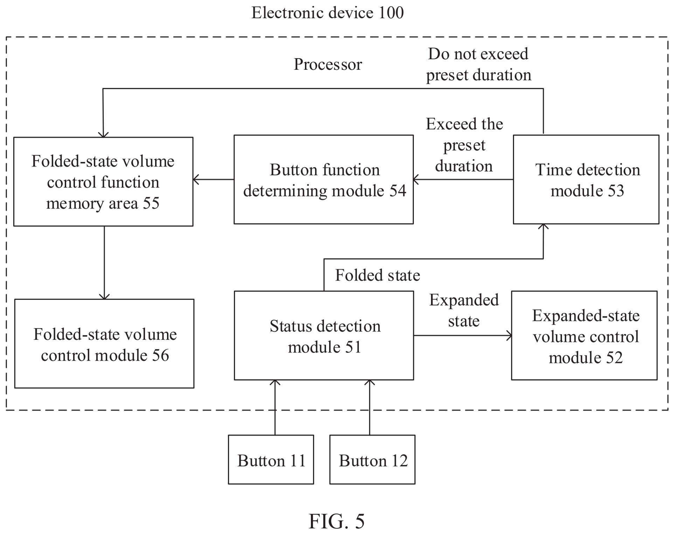

As shown in FIG. 5, the electronic device 100 includes one or more software modules. The one or more software modules may include but are not limited to a status detection module 51, an expanded-state volume control module 52, a time detection module 53, a button function determining module 54, and a folded-state volume control module 56. The electronic device 100 may further include a folded-state volume control function memory area 55.

The status detection module 51 may be configured to: after an input of a user on a volume button (for example, a button 11 or a button 12) is received, detect whether the electronic device 100 is in a folded state. For example, the status detection module 51 may determine, by using one or more sensors (for example, a gyroscope sensor and a magnetic sensor), whether the electronic device 100 is in the folded state. When detecting that the electronic device 100 is in the folded state, the status detection module 51 may prompt the time detection module 53 to detect whether preset duration is exceeded. When detecting that the electronic device 100 is in an expanded state, the status detection module 51 may prompt the expanded-state volume control module 52 to adjust volume.

The expanded-state volume control module 52 may be configured to adjust volume when the electronic device 100 is in the expanded state. When the electronic device 100 is in the expanded state, the expanded-state volume control module 52 may determine that a function of the button 11 is increasing volume at which the electronic device 100 plays audio and a function of the button 12 is decreasing volume at which the electronic device 100 plays audio. The expanded-state volume control module 52 may increase (raise) volume when an input of pressing the button 11 by the user is received. The expanded-state volume control module 52 may further decrease (lower) volume when an input of pressing the button 12 by the user is received.

The time detection module 53 may be configured to detect whether duration from a previous setting of the functions of the volume buttons exceeds preset duration. The time detection module 53 may start timing after the button function determining module 54 sets the functions of the volume buttons, to detect whether the preset duration is exceeded. For details, refer to the embodiment shown in FIG. 4. Details are not described herein again. When receiving a notification from the status detection module 51 and detecting that the preset duration is not exceeded, the time detection module 53 obtains the functions of the volume buttons from the folded-state volume control function memory area 55, and sends information about the functions of the volume buttons to the folded-state volume control module 56. When the time detection module 53 receives a notification from the status detection module 51 and detects that the preset duration is exceeded, the time detection module 53 prompts the button function determining module 54 to set the functions of the volume buttons.

It should be noted that, when the time detection module 53 receives a notification from the status detection module 51 and determines whether the preset duration is exceeded, if the time detection module 53 does not perform timing, it is considered that the preset duration is exceeded.

The button function determining module 54 is configured to set the functions of the volume buttons of the electronic device 100 in the folded state. The button function determining module 54 may set a volume button receiving a press operation of the user to a first function, and set the other volume button to a second function. The first function and the second function are different. For example, the first function is increasing volume at which the electronic device 100 plays audio, and the second function is decreasing volume at which the electronic device 100 plays audio. For another example, the first function is decreasing volume at which the electronic device 100 plays audio, and the second function is increasing volume at which the electronic device 100 plays audio. After setting the functions of the volume buttons, the button function determining module 54 may store information about the functions of the volume buttons in the folded-state volume control function memory area 55. After setting the functions of the volume buttons, the button function determining module 54 may further prompt the time detection module 53 to start a timing operation, where the timing operation is used to detect whether the preset duration is exceeded. Optionally, after setting the functions of the volume buttons, the button function determining module 54 may prompt the folded-state volume control module 56 to adjust volume of the electronic device 100 based on a function of a pressed volume button.

The folded-state volume control function memory area 55 is a storage area that is allocated by the electronic device 100 and that is used to store information about the functions of the volume buttons. The folded-state volume control function memory area 55 may be configured to store the information about the functions of the volume buttons that is sent by the button function determining module 54, where the information about the functions may indicate the functions corresponding to the volume buttons.

The folded-state volume control module 56 may be configured to: obtain information about the functions of the volume buttons from the folded-state volume control function memory area 55, and determine the functions corresponding to the volume buttons. The folded-state volume control module 56 may further adjust the volume of the electronic device 100 based on the function of the pressed volume button.

In some examples, the plurality of modules may be disposed in a processor (for example, the processor 110 shown in FIG. 3) of the electronic device 100. It should be noted that, the modules shown in FIG. 5 do not constitute a specific limitation on the electronic device 100. In some other examples of this application, the electronic device 100 may include more or fewer modules than those shown in the figure, or some modules may be combined, or some modules may be split, or different module arrangements may be used, or the like. This is not limited in embodiments of this application.

The following describes the volume adjustment method provided in embodiments of this application with reference to the modules shown in FIG. 5.

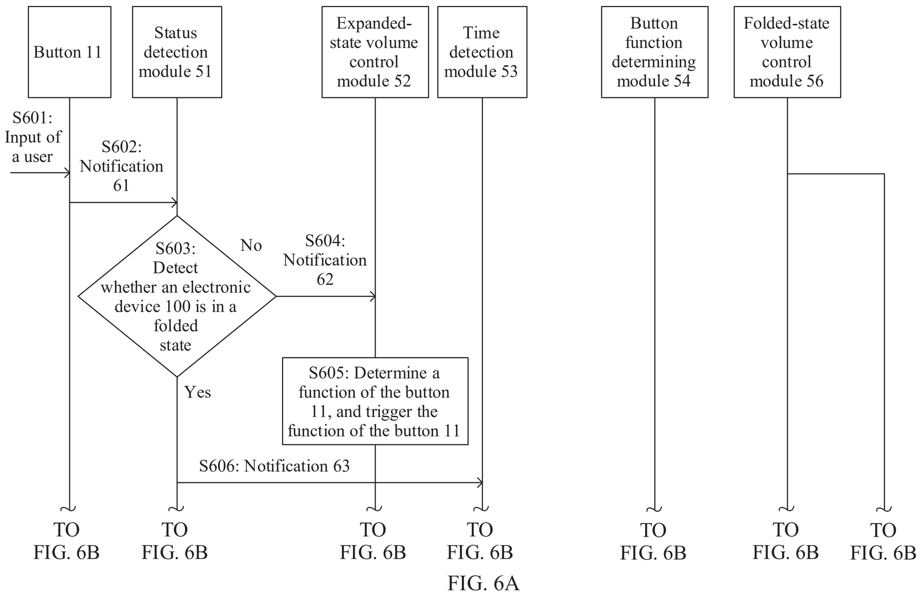

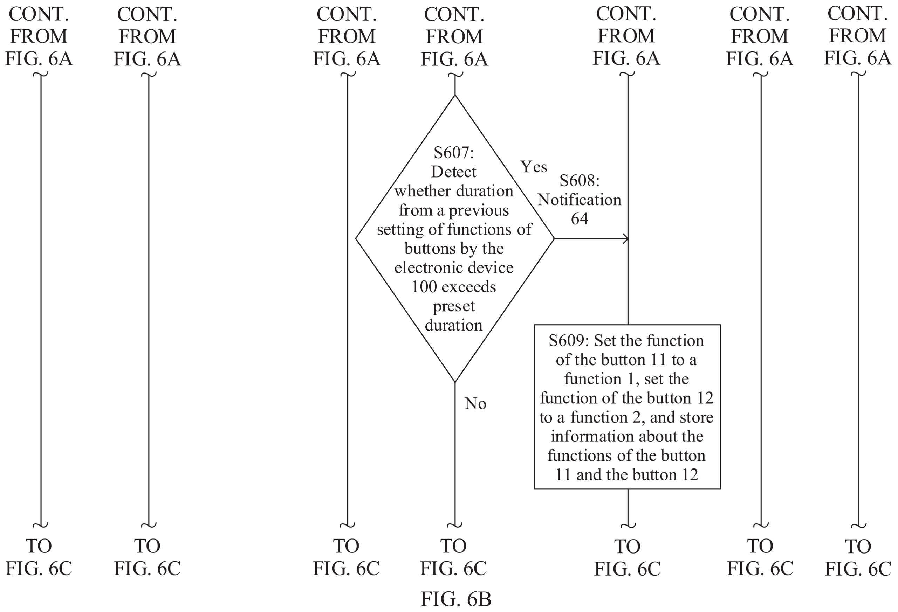

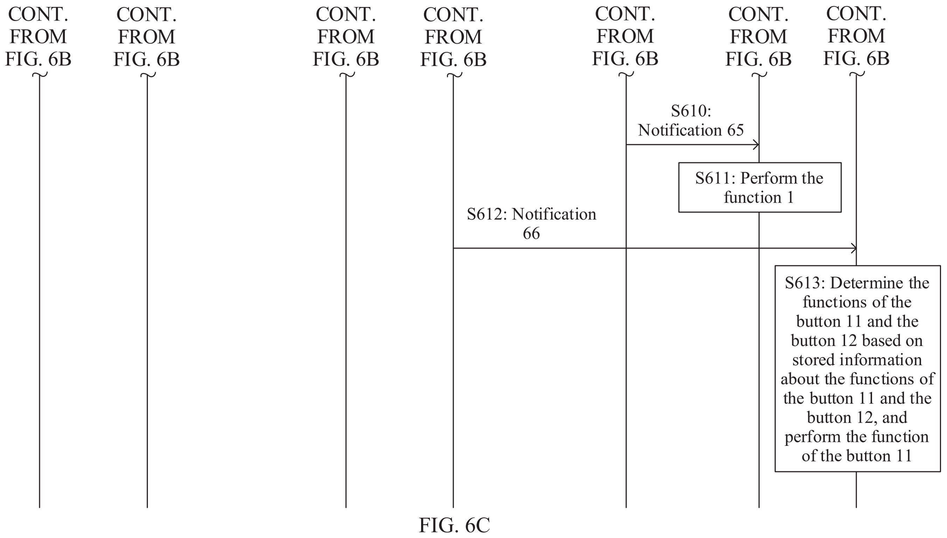

For example, the volume adjustment method provided in embodiments of this application is applied to an electronic device 100 including a button 11, a button 12, and a foldable screen. A status of the electronic device 100 includes a folded state and an expanded state. When the electronic device 100 is in the expanded state, a function of the button 11 is a volume increase function, and a function of the button 12 is a volume decrease function. As shown in FIG. 6A to FIG. 6C, the volume adjustment method includes the following steps.

S601: The button 11 receives an input of a user.

The input of the user may be a press input.

S602: The button 11 sends a notification 61 to the status detection module 51.

The notification 61 may be used to prompt the status detection module 51 to detect the status of the electronic device 100. The notification 61 may include an identifier of the button 11, and the identifier of the button 11 may indicate that a pressed button is the button 11. It may be understood that, after the button 11 receives the input (for example, the press input) of the user, a driver of the button 11 may detect that the button 11 is triggered by the user, and send the notification 61 to the status detection module 51. It may be further understood that, after receiving an input of the user on a volume button, the electronic device 100 may send an identifier of the volume button to the status detection module 51.

S603: The status detection module 51 detects whether the electronic device 100 is in the folded state.

After receiving the notification 61, the status detection module 51 may determine whether the electronic device 100 is in the folded state. For descriptions of the status detection module 51 detecting whether the electronic device 100 is in the folded state, refer to the foregoing embodiments. Details are not described herein again.

When detecting that the electronic device 100 is not in the folded state, the status detection module 51 may perform step S604. When detecting that the electronic device 100 is in the folded state, the status detection module 51 may perform step S606.

S604: The status detection module 51 sends a notification 62 to the expanded-state volume control module 52.

When detecting that the electronic device 100 is not in the folded state, the status detection module 51 sends the notification 62 to the expanded-state volume control module 52. The notification 62 may be used to prompt the expanded-state volume control module 52 to adjust volume at which the electronic device 100 plays audio.

S605: The expanded-state volume control module 52 determines a function of the button 11, and triggers the function of the button 11.

Information about functions of the button 11 and the button 12 in the expanded state is stored in the expanded-state volume control module 52. Herein, the function of the button 11 is the volume increase function, and the function of the button 12 is the volume decrease function. After receiving the notification 62 from the status detection module 51, the expanded-state volume control module 52 may set the functions of the button 11 and the button 12.

In some examples, the notification sent by the status detection module 51 to the expanded-state volume control module 52 includes an identifier of a pressed volume button. Herein, the notification 62 includes an identifier of the button 11, and the expanded-state volume control module 52 may increase, based on the identifier of the button 11, volume at which the electronic device 100 plays audio.

In some other examples, after receiving the notification 62, the expanded-state volume control module 52 may obtain the identifier of the pressed volume button from the status detection module 51, and trigger a function of the volume button, to change volume of the electronic device 100. Herein, the expanded-state volume control module 52 obtains the identifier of the button 11, and may trigger the function of the button 11.

It may be understood that, when the electronic device 100 receives an input of pressing the button 12 by the user, the expanded-state volume control module 52 may obtain an identifier of the button 12, and trigger the function of the button 12.

S606: The status detection module 51 sends a notification 63 to the time detection module 53.

When detecting that the electronic device 100 is in the folded state, the status detection module 51 sends the notification 63 to the time detection module 53. The notification 63 indicates the time detection module 53 to detect whether duration from a previous setting of functions of the volume buttons exceeds preset duration.

S607: The time detection module 53 detects whether the duration from the previous setting of the functions of the buttons by the electronic device 100 exceeds the preset duration.

When detecting that the preset duration is exceeded, the time detection module 53 may perform step S608. When detecting that the preset duration is not exceeded, the time detection module 53 may perform step S612. For descriptions of the time detection module 53 detecting whether the preset duration is exceeded, refer to the foregoing embodiments. Details are not described herein again.

S608: The time detection module 53 sends a notification 64 to the button function determining module 54.

After detecting that the duration from the previous setting of the functions of the buttons by the electronic device 100 exceeds the preset duration, the time detection module 53 may send the notification 64 to the button function determining module 54. The notification 64 is used to prompt the button function determining module 54 to set the functions of the volume buttons (namely, the button 11 and the button 12).

S609: The button function determining module 54 sets the function of the button 11 to a function 1, sets the function of the button 12 to a function 2, and stores information about the functions of the button 11 and the button 12.

The button function determining module 54 stores information about how to set a function of a pressed volume button. After receiving the notification 64 from the time detection module 53, the button function determining module 54 may set the functions of the volume buttons based on an identifier of the pressed volume button and the stored information about the functions.

In some examples, both the notification 63 and the notification 64 include the identifier of the pressed volume button. The button function determining module 54 may obtain the identifier of the pressed volume button accordingly. In some other examples, after receiving the notification 64, the expanded-state volume control module 52 may obtain the identifier of the pressed volume button from drivers of the button 11 and the button 12.

Herein, the button function determining module 54 obtains the identifier of the button 11, and may set the function of the button 11 to the function 1 in the volume increase function and the volume decrease function, and set the function of the button 12 to the function 2 in the volume increase function and the volume decrease function. For example, the function 1 is increasing volume at which the electronic device 100 plays audio, and the function 2 is decreasing volume at which the electronic device 100 plays audio. For another example, the function 1 is decreasing volume at which the electronic device 100 plays audio, and the function 2 is increasing volume at which the electronic device 100 plays audio. Specifically, for descriptions of the button function determining module 54 setting the functions of the buttons, refer to the embodiment shown in FIG. 4. Details are not described herein again.

After setting the functions of the volume buttons, the button function determining module 54 may store information about the functions of the volume buttons in the folded-state volume control function memory area 55. For example, the information about the functions may include a correspondence between the button 11 and the function of the button 11 and a correspondence between the button 12 and the function of the button 12. For example, the button function determining module 54 may store a correspondence between the identifier of the button 11 and the function 1 and a correspondence between the identifier of the button 12 and the function 2 in the folded-state volume control function memory area 55.

S610: The button function determining module 54 sends a notification 65 to the folded-state volume control module 56.

After setting the functions of the volume buttons, the button function determining module 54 may send the notification 65 to the folded-state volume control module 56. The notification 65 is used to prompt the folded-state volume control module 56 to adjust volume at which the electronic device 100 plays audio.

S611: The folded-state volume control module 56 performs the function 1.

After receiving the notification 65 sent by the button function determining module 54, the folded-state volume control module 56 may determine that the triggered volume button is the button 11, and perform the function 1 of the button 11.

In some examples, the notification 65 sent by the button function determining module 54 to the folded-state volume control module 56 includes the identifier of the pressed volume button, or the folded-state volume control module 56 may obtain the identifier of the pressed volume button from the button function determining module 54 or the drivers of the volume buttons after receiving the notification 65.

In some examples, after receiving the notification 65, the folded-state volume control module 56 may obtain the information about the functions of the volume buttons from the folded-state volume control function memory area 55, and determine the functions of the volume buttons.

The folded-state volume control module 56 may trigger the function of the button 11 after receiving the identifier of the button 11. It may be understood that, the function 1 corresponds to the first function shown in FIG. 4, and the function 2 corresponds to the second function shown in FIG. 4.

S612: The time detection module 53 sends a notification 66 to the folded-state volume control module 56.

After detecting that the duration from the previous setting of the functions of the buttons by the electronic device 100 does not exceed the preset duration, the time detection module 53 may send the notification 66 to the folded-state volume control module 56. The notification 66 is used to prompt the folded-state volume control module 56 to adjust volume at which the electronic device 100 plays audio.

S613: The folded-state volume control module 56 determines the functions of the button 11 and the button 12 based on information about the functions of the button 11 and the button 12 that is stored in the folded-state volume control function memory area 55, and performs the function of the button 11.

Within the preset time from the previous setting of the functions of the buttons by the electronic device 100, the folded-state volume control function memory area 55 stores information about functions to which the buttons are set by the electronic device 100 during the previous setting. The folded-state volume control module 56 may determine the functions of the button 11 and the button 12 based on the information about the functions that is stored in the folded-state volume control function memory area 55.

In some examples, the notification 66 includes the information about the functions of the volume buttons. After detecting that the duration from the previous setting of the functions of the buttons by the electronic device 100 does not exceed the preset duration, the time detection module 53 may obtain the information about the functions of the volume buttons from the folded-state volume control function memory area 55, and send the information about the functions of the volume buttons to the folded-state volume control module 56.

In some other examples, after receiving the notification 66 from the time detection module 53, the folded-state volume control module 56 may obtain the information about the functions of the volume buttons from the folded-state volume control function memory area 55.

The notification 63 and the notification 66 include the identifier of the pressed volume button, and the folded-state volume control module 56 may obtain the identifier of the pressed volume button based on the notification 66. Alternatively, after receiving the notification 66, the folded-state volume control module 56 may obtain the identifier of the pressed volume button from the drivers of the volume buttons.

The folded-state volume control module 56 may determine the functions of the volume buttons based on the information about the functions of the volume buttons. The folded-state volume control module 56 may trigger, based on the identifier of the pressed volume button, a function of the volume button corresponding to the identifier. Herein, the folded-state volume control module 56 triggers the function of the button 11 based on the identifier of the button 11. Similarly, when the electronic device 100 receives an input of pressing the button 12 by the user, the folded-state volume control module 56 may trigger the function of the button 12 based on the identifier of the button 12.

In this way, the electronic device 100 can implement, by using the foregoing modules, the volume adjustment method provided in embodiments of this application.

In some application scenarios, an electronic device 100 and an electronic device 200 establishes a communication connection to each other, for example, a Bluetooth communication connection. The electronic device 100 may send audio data to the electronic device 200 through the communication connection, and the electronic device 200 may play audio based on the audio data sent by the electronic device 100. The electronic device 200 is an electronic device including a speaker, for example, a Bluetooth headset, a headset, smart glasses, or a Bluetooth speaker. The electronic device 100 may receive an input of a user on a volume button, and adjust volume at which the electronic device 200 plays audio. The electronic device 100 may determine a function of the pressed volume button according to the volume adjustment method provided in embodiments of this application, to adjust volume of the electronic device 200. In this way, the electronic device 100 is not limited to adjusting volume of the electronic device 100. When a communication connection is established between the electronic device 100 and another electronic device, a function of a volume button of the electronic device 100 can be determined without determining the function of the volume button of the electronic device 100 by viewing or touching, and volume of the another electronic device can be adjusted by pressing the volume button of the electronic device 100.

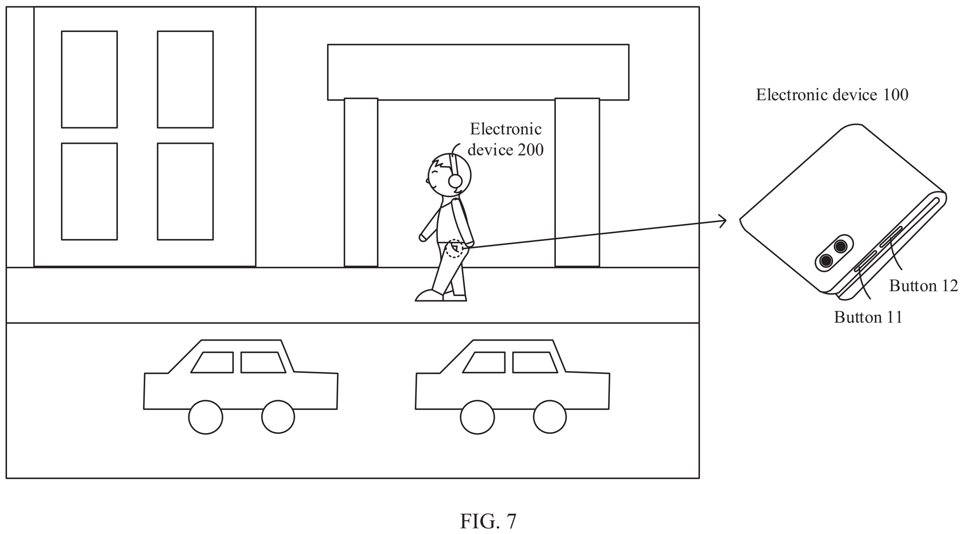

For example, as shown in FIG. 7, the electronic device 100 is a device with a foldable screen, and the electronic device 200 is a Bluetooth headset. A communication connection is established between the electronic device 100 and the electronic device 200. The electronic device 100 in a folded state is placed in a pocket of a user, and the electronic device 200 is worn on ears of the user. The user is walking on a road, and when the user expects to adjust volume of the electronic device 200, the user may press a volume button of the electronic device 100 in the pocket. After receiving a press input of the user on a volume button, the electronic device 100 may determine a function of the volume button in response to the input according to the embodiment shown in FIG. 4, and adjust volume at which the electronic device 200 plays audio. In this way, the user can adjust the playing volume of the electronic device 200 without taking out the electronic device 100. This facilitates adjustment of the volume by the user, and can avoid a road safety problem caused by no road watching because the user does not need to view a location of the volume button of the electronic device 100.

For example, the electronic device 100 sets a volume button pressed in a folded state to decreasing volume at which the electronic device 100 plays audio. Herein, the electronic device 200 is playing audio sent by the electronic device 100. After the electronic device 100 receives a press input of the user on a button 11, the electronic device 100 determines that the electronic device 100 is in the folded state. If the electronic device 100 further determines that preset duration is exceeded, the electronic device 100 may set the button 11 to decreasing volume at which the electronic device 100 plays audio, and set a button 12 to increasing volume at which the electronic device 100 plays audio. The electronic device 100 prompts the electronic device 200 to decrease volume of playing the audio. After receiving a notification message from the electronic device 100, the electronic device 200 decreases the volume of playing the audio sent by the electronic device 100.

In a possible implementation, not limited to being applied to the foldable screen that features planar folding shown in FIG. 1A to FIG. 1C, the volume adjustment method provided in embodiments of this application may also be applied to an electronic device 100 with a foldable screen that features rolling. The rollable screen of the electronic device 100 may be pulled out or rolled back in a direction perpendicular to a rolling axis, to change a screen length of the rollable screen in the direction perpendicular to the rolling axis.

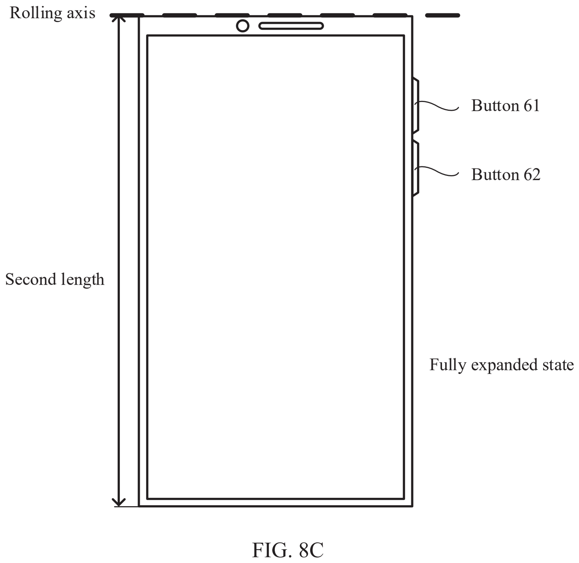

For example, FIG. 8A to FIG. 8C are diagrams of product forms of an electronic device 100 with a rollable screen according to an embodiment of this application. Forms of the rollable screen may be classified into an unexpanded state, a half-expanded state, and a fully expanded state. FIG. 8A is a diagram of the rollable screen in the unexpanded state. When the rollable screen is in the unexpanded state, a part of screen of the rollable screen is hidden in a body of the electronic device 100, and the electronic device 100 may display an interface of an application on another part of screen that is expanded. In this case, a screen length is a first length. The part of screen of the rollable screen hidden in the body may extend in a specified direction (for example, an arrow direction shown in the figure). When the screen of the rollable screen is not fully expanded, the rollable screen is in the half-expanded state, as shown in FIG. 8B. When the rollable screen is in the half-expanded state, the part of screen of the rollable screen hidden in the body is reduced, and a part of screen exposed on a surface of the body is increased, until the rollable screen is fully exposed on the surface of the body. When the rollable screen is fully exposed on the surface of the body, the rollable screen is in the fully expanded state, as shown in FIG. 8C. In this case, the screen length is a second length. The second length is greater than the first length. It may be understood that, when the screen length is greater than the first length and less than the second length, the rollable screen is in the half-expanded state. For example, the electronic device 100 may be provided with a motor and a rolling structure. The electronic device 100 may drive, by using the motor, the rolling structure to expand or roll a display, to change a screen size.

The electronic device 100 includes one or more buttons. The one or more buttons include a button 61 and a button 62. In the fully expanded state or the half-expanded state, the button 61 of the electronic device 100 is configured to increase volume, and the button 62 of the electronic device 100 is configured to decrease volume. In the unexpanded state, the electronic device 100 may set functions of the button 61 and the button 62 according to the volume adjustment method provided in embodiments of this application.

Alternatively, a third length is set in the electronic device 100. When detecting that a length of the expanded display is less than the third length, the electronic device 100 may set the functions of the button 61 and the button 62 according to the volume adjustment method provided in embodiments of this application. When the electronic device 100 detects that the length of the expanded display is greater than or equal to the third length, the button 61 is configured to increase volume, and the button 62 is configured to decrease volume. The third length is greater than or equal to the first length, and is less than the second length. Specifically, for descriptions of the electronic device 100 setting the functions of the volume buttons, refer to the foregoing embodiments. Details are not described herein again.

It should be noted that, in this embodiment of this application, the screen of the rollable screen may be expanded in a first direction perpendicular to the rolling axis, from the unexpanded state, to the half-expanded state, and to the fully expanded state. Similarly, the screen of the rollable screen may be further retracted in a second direction perpendicular to the rolling axis, from the fully expanded state, to the half-expanded state, and to the unexpanded state. The first direction is opposite to the second direction.

In a possible implementation, after receiving a first input on any volume button, an electronic device 100 may detect whether the electronic device 100 is in a folded state. When determining that the electronic device 100 is not in the folded state, the electronic device 100 may set functions of volume buttons to default functions. When determining that the electronic device 100 is in the folded state, the electronic device 100 may set functions of a first volume button and a second volume button. The two volume buttons are set to different functions. The electronic device 100 may further perform the function of the volume button receiving the first input. Within preset duration after the electronic device 100 sets the two volume buttons, the functions of the volume buttons remain unchanged. After receiving a second input on any volume button within the preset duration, the electronic device 100 may perform the function of the volume button receiving the second input. After receiving a second input on any volume button outside the preset duration, the electronic device 100 may reset the functions of the volume buttons based on whether the electronic device 100 is in the folded state, and perform the function of the volume button receiving the second input. In this way, when the electronic device 100 is in the folded state, the function of each volume button may be set after an input of a user is received. The user can determine a function corresponding to a pressed volume button, and determine a function corresponding to the other volume button, without distinguishing between relative locations of the volume buttons, so that the user can adjust volume of the electronic device 100 more conveniently.

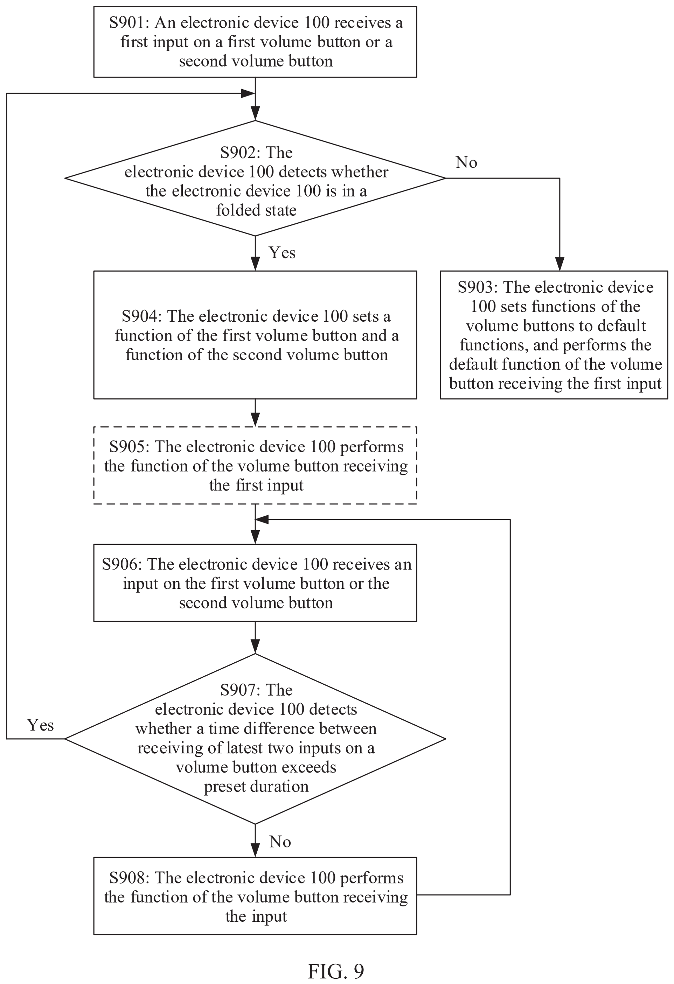

For example, as shown in FIG. 9, the volume adjustment method includes the following steps.

S901: An electronic device 100 receives a first input on a first volume button or a second volume button.

The electronic device 100 includes a foldable screen, the first volume button, and the second volume button. A manner of folding the foldable screen may be planar folding, rolling, or the like. For descriptions of a foldable screen that features planar folding, refer to the embodiment shown in FIG. 1A to FIG. 1C. For descriptions of a foldable screen that features rolling, refer to the embodiment shown in FIG. 8A to FIG. 8C. Details are not described herein again. The first volume button and the second volume button are configured to adjust volume of the electronic device 100. Functions of the first volume button and the second volume button of the electronic device 100 in an expanded state are default functions.

The first input may be pressing, tapping, sliding, or the like.

S902: The electronic device 100 detects whether the electronic device 100 is in a folded state.

After receiving the first input on the first volume button or the second volume button, the electronic device 100 may determine whether the electronic device 100 is in the folded state. When the electronic device 100 determines that the electronic device 100 is not in the folded state, the electronic device 100 may perform step S903. When the electronic device 100 determines that the electronic device 100 is in the folded state, the electronic device 100 may perform step S904. For descriptions of the electronic device 100 detecting whether the electronic device 100 is in the folded state, refer to the embodiment shown in FIG. 4. Details are not described herein again.

S903: The electronic device 100 sets functions of the volume buttons to default functions, and performs the default function of the volume button receiving the first input.

When detecting that the electronic device 100 is not in the folded state, the electronic device 100 may set the functions of the first volume button and the second volume button to the default functions. After setting the volume buttons to the default functions, the electronic device 100 may perform the default function of the volume button receiving the first input. For example, the default function of the first volume button is increasing volume, and the default function of the second volume button is decreasing volume. For another example, the default function of the first volume button is decreasing volume, and the default function of the second volume button is increasing volume.

S904: The electronic device 100 sets a function of the first volume button and a function of the second volume button.

After determining that the electronic device 100 is in the folded state, the electronic device 100 may set the functions of the first volume button and the second volume button. The electronic device 100 may set the volume button receiving the first input to increasing volume, and set the other volume button to decreasing volume. Alternatively, the electronic device 100 may set the volume button receiving the first input to decreasing volume, and set the other volume button to increasing volume. Alternatively, after receiving the first input, the electronic device 100 may collect environment information, and set the functions of the volume buttons of the electronic device 100 based on the environment information. Alternatively, the electronic device 100 may set the functions of the volume buttons of the electronic device 100 based on volume of the electronic device 100 and a first volume threshold. Alternatively, the electronic device 100 may set a threshold of the electronic device 100 based on location information of the electronic device 100. Alternatively, the electronic device 100 may determine the functions of the volume buttons based on one or more of the following factors: the environment information, the volume of the electronic device 100, the first volume threshold, and the location information of the electronic device 100. It should be noted that, when the electronic device 100 determines the functions of the volume buttons based on a plurality of factors, if different factors correspond to different functions of the volume button, the electronic device 100 may determine the functions of the volume buttons based on one of the factors.

In some examples, before performing step S904, the electronic device 100 may determine whether the electronic device 100 is in a state of playing audio data. Step S904 is performed only when the electronic device 100 determines that the electronic device 100 is in the state of playing audio data. This can avoid a case in which the electronic device 100 performs an operation of setting the functions of the volume buttons because an input of an accidental touch on a volume button by a user is received.

S905: The electronic device 100 performs the function of the volume button receiving the first input.

After setting the functions of the first volume button and the second volume button, the electronic device 100 may perform the function of the volume button receiving the first input. It may be understood that step S905 is an optional step, and the electronic device 100 may not perform step S905 after performing step S904. After receiving an input of the user on any volume button again within preset duration after step S904 is performed, the electronic device 100 may perform the function of the volume button.

S906: The electronic device 100 receives an input on the first volume button or the second volume button.

S907: The electronic device 100 detects whether a time difference between receiving of latest two inputs on a volume button exceeds preset duration.

After receiving an input on a volume button, the electronic device 100 may determine whether a time difference between a time at which the input on the volume button is received and a time at which a previous input on a volume button is received exceeds the preset duration. When the electronic device 100 determines that the time difference between receiving of the latest two inputs on the volume button does not exceed the preset duration, the electronic device 100 may perform step S908. When the electronic device 100 determines that the time difference between receiving of the latest two inputs on the volume button exceeds the preset duration, the electronic device 100 may perform step S902. In this way, after the electronic device 100 sets the functions of the volume buttons, the functions of the volume buttons may remain unchanged in a period of time, to facilitate adjustment of the volume of the electronic device 100 by the user. After the period of time, it is convenient for the user to reset the functions of the volume buttons.

S908: The electronic device 100 performs the function of the volume button receiving the input.

When the electronic device 100 determines that the time difference between receiving of the latest two inputs on the volume button does not exceed the preset duration, the functions of the volume buttons of the electronic device 100 are the same as functions to which the volume buttons are set after the previous input is received. For example, a previous input of a current input is the first input. After the electronic device 100 determines that a time difference between the current input and the first input is less than the preset duration, the electronic device 100 may perform, based on functions to which the volume buttons are set when the electronic device 100 receives the first input, a function of a volume button receiving the current input.

It should be noted that, after performing step S908, the electronic device 100 returns to step S906; and if an input of the user on a volume button is received again, a step is performed. After detecting that the electronic device 100 switches from the folded state to the expanded state, the electronic device 100 may terminate the procedure shown in FIG. 9.

It should be further noted that, when detecting that the electronic device 100 switches to the expanded state, the electronic device 100 may set the functions of the first volume button and the second volume button to the default functions. This does not affect use, by the user, of a function of adjusting the volume of the electronic device 100 in the expanded state.

In a possible implementation, after receiving a first input on any volume button, an electronic device 100 may detect whether the electronic device 100 is in a folded state. When determining that the electronic device 100 is not in the folded state, the electronic device 100 performs a default function of the volume button receiving the first input. When determining that the electronic device 100 is in the folded state, the electronic device 100 may set functions of a first volume button and a second volume button. The two volume buttons are set to different functions. The electronic device 100 may further perform the function of the volume button receiving the first input. The electronic device 100 may detect, within first preset duration after the function of the volume button is performed, whether an input on a volume button is received again. When the electronic device 100 does not receive an input on a volume button within the first preset duration, the electronic device 100 may set the functions of the volume buttons to default functions.

After the electronic device 100 receives an input on a volume button within the first preset duration, the electronic device 100 may determine whether a time difference between receiving of latest two inputs on a volume button exceeds second preset duration. Within the second preset duration after the electronic device 100 sets the functions of the two volume buttons, the functions of the volume buttons remain unchanged. When detecting that the time difference between the latest two inputs on the volume button is less than the second preset duration, the electronic device 100 may perform the function of the volume button receiving the latest input. When detecting that the time difference between the latest two inputs on the volume button is greater than the second preset duration, the electronic device 100 may determine and perform, based on whether the electronic device 100 is in the folded state, the function of the volume button receiving the input. In this way, when the electronic device 100 is in the folded state, the function of each volume button may be set after an input of a user is received. The user can determine a function corresponding to a pressed volume button, and determine a function corresponding to the other volume button, without distinguishing between relative locations of the volume buttons, so that the user can adjust volume of the electronic device 100 more conveniently. The electronic device 100 may further set the functions of the volume buttons to the default functions when not detecting an input of the user on a volume button in a period of time. This does not hinder an operation of the user of adjusting the volume of the electronic device 100 when the electronic device 100 is in an expanded state.

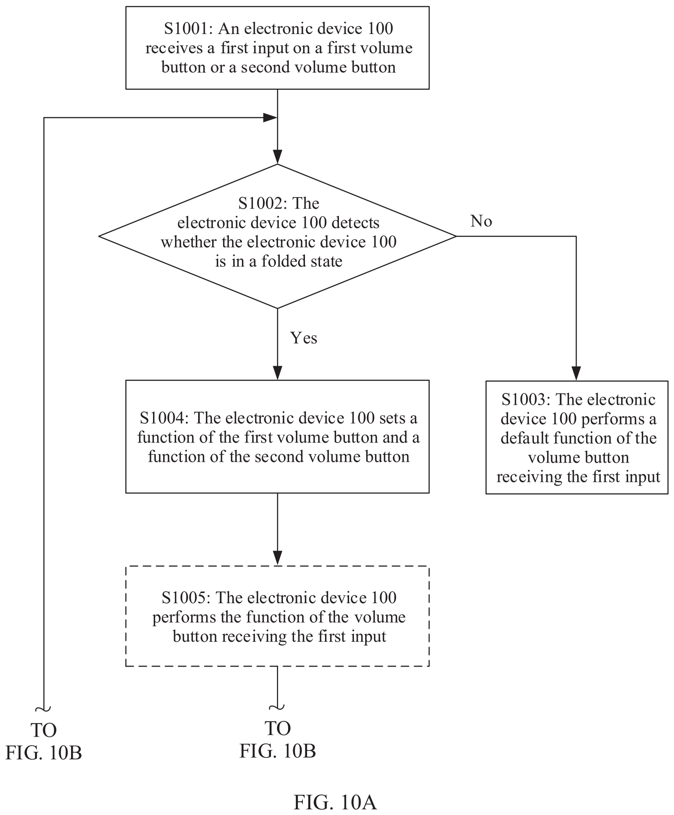

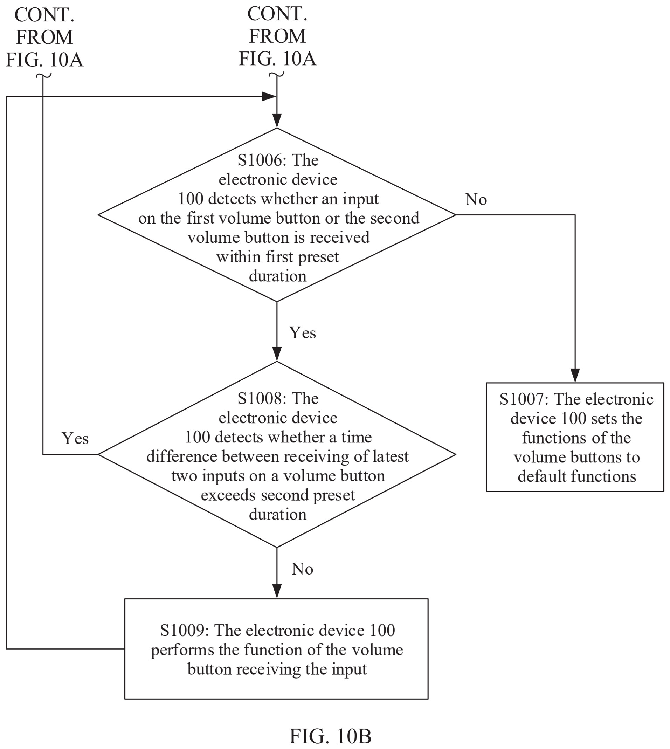

For example, as shown in FIG. 10A and FIG. 10B, the volume adjustment method includes the following steps.

S1001: An electronic device 100 receives a first input on a first volume button or a second volume button.

The electronic device 100 includes a foldable screen, the first volume button, and the second volume button. A manner of folding the foldable screen may be planar folding, rolling, or the like. For descriptions of a foldable screen that features planar folding, refer to the embodiment shown in FIG. 1A to FIG. 1C. For descriptions of a foldable screen that features rolling, refer to the embodiment shown in FIG. 8A to FIG. 8C. Details are not described herein again. The first volume button and the second volume button are configured to adjust volume of the electronic device 100. The first input may be a press input, a tap input, or the like.

S1002: The electronic device 100 detects whether the electronic device 100 is in a folded state.

After receiving the first input on the first volume button or the second volume button, the electronic device 100 may determine whether the electronic device 100 is in the folded state. When the electronic device 100 determines that the electronic device 100 is not in the folded state, the electronic device 100 may perform step S1003. When the electronic device 100 determines that the electronic device 100 is in the folded state, the electronic device 100 may perform step S1004. For descriptions of the electronic device 100 detecting whether the electronic device 100 is in the folded state, refer to the embodiment shown in FIG. 4. Details are not described herein again.

S1003: The electronic device 100 performs a default function of the volume button receiving the first input.

The electronic device 100 may set functions of the first volume button and the second volume button to default functions when the electronic device 100 is powered on. After determining that the electronic device 100 is not in the folded state in step S1002, the electronic device 100 may perform the default function of the first volume button.

For example, the default function of the first volume button is increasing volume, and the default function of the second volume button is decreasing volume. For another example, the default function of the first volume button is decreasing volume, and the default function of the second volume button is increasing volume.

S1004: The electronic device 100 sets a function of the first volume button and a function of the second volume button.

After determining that the electronic device 100 is in the folded state, the electronic device 100 may set the functions of the first volume button and the second volume button. The electronic device 100 may set the volume button receiving the first input to increasing volume, and set the other volume button to decreasing volume. Alternatively, the electronic device 100 may set the volume button receiving the first input to decreasing volume, and set the other volume button to increasing volume. Alternatively, after receiving the first input, the electronic device 100 may collect environment information, and set the functions of the volume buttons of the electronic device 100 based on the environment information. Alternatively, the electronic device 100 may set the functions of the volume buttons of the electronic device 100 based on volume of the electronic device 100 and a first volume threshold. Alternatively, the electronic device 100 may set a threshold of the electronic device 100 based on location information of the electronic device 100. Alternatively, the electronic device 100 may determine the functions of the volume buttons based on one or more of the following factors: the environment information, the volume of the electronic device 100, the first volume threshold, and the location information of the electronic device 100. It should be noted that, when the electronic device 100 determines the functions of the volume buttons based on a plurality of factors, if different factors correspond to different functions of the volume button, the electronic device 100 may determine the functions of the volume buttons based on one of the factors. For details, refer to the embodiment shown in FIG. 4. Details are not described herein again.

In some examples, before performing step S1004, the electronic device 100 may determine whether the electronic device 100 is in a state of playing audio data. Step S1004 is performed only when the electronic device 100 determines that the electronic device 100 is in the state of playing audio data. This can avoid a case in which the electronic device 100 performs an operation of setting the functions of the volume buttons because an input of an accidental touch on a volume button by a user is received.

S1005: The electronic device 100 performs the function of the volume button receiving the first input.

After setting the functions of the first volume button and the second volume button, the electronic device 100 may perform the function of the volume button receiving the first input. It may be understood that step S1005 is an optional step, and the electronic device 100 may not perform step S1005 after performing step S1004. After receiving an input of the user on any volume button again within preset duration after step S1004 is performed, the electronic device 100 may perform the function of the volume button.

S1006: The electronic device 100 detects whether an input on the first volume button or the second volume button is received within first preset duration.

When the electronic device 100 does not receive the input on the first volume button or the second volume button within the first preset duration, the electronic device 100 may perform step S1007. When the electronic device 100 receives the input on the first volume button or the second volume button within the first preset duration, the electronic device 100 may perform step S1008.

S1007: The electronic device 100 sets the functions of the volume buttons to default functions.

In this way, when the user does not trigger a volume button for a long time, the electronic device 100 sets the functions of the volume buttons to the default functions, and when the electronic device 100 switches to an expanded state, use of a volume adjustment function of the electronic device 100 by the user is not affected.

S1008: The electronic device 100 detects whether a time difference between receiving of latest two inputs on a volume button exceeds second preset duration.

After receiving an input on a volume button, the electronic device 100 may determine whether a time difference between a time at which the input on the volume button is received and a time at which a previous input on a volume button is received exceeds the second preset duration. When the electronic device 100 determines that the time difference between receiving of the latest two inputs on the volume button does not exceed the second preset duration, the electronic device 100 may perform step S1009. When the electronic device 100 determines that the time difference between receiving of the latest two inputs on the volume button exceeds the second preset duration, the electronic device 100 may perform step S1002. In this way, after the electronic device 100 sets the functions of the volume buttons, the functions of the volume buttons may remain unchanged in a period of time, to facilitate adjustment of the volume of the electronic device 100 by the user. After the period of time, it is convenient for the user to reset the functions of the volume buttons.

S1009: The electronic device 100 performs the function of the volume button receiving the input.

When the electronic device 100 determines that the time difference between receiving of the latest two inputs on the volume button does not exceed the second preset duration, the functions of the volume buttons of the electronic device 100 are the same as functions to which the volume buttons are set after the previous input is received. For example, a previous input of a current input is the first input. After the electronic device 100 determines that a time difference between the current input and the first input is less than the second preset duration, the electronic device 100 may perform, based on functions to which the volume buttons are set when the electronic device 100 receives the first input, a function of a volume button receiving the current input.

It should be noted that, when detecting that the electronic device 100 switches from the folded state to the expanded state, the electronic device 100 may set the functions of the first volume button and the second volume button to the default functions. This does not affect use, by the user, of a function of adjusting the volume of the electronic device 100 in the expanded state.

It should be noted that, the first preset duration and the second preset duration may be the same or different, and are set according to an actual product design requirement. This is not specifically limited in embodiments of this application.

It should be further noted that, in FIG. 9 and FIG. 10A and FIG. 10B, a device with a foldable screen that features planar folding is used as an example to describe the volume adjustment method provided in embodiments of this application. Not limited to being applied to a foldable screen that features planar folding, the volume adjustment method provided in FIG. 9 and/or FIG. 10A and FIG. 10B may also be applied to a device with a foldable screen that features rolling. When the volume adjustment method provided in FIG. 9 and/or FIG. 10A and FIG. 10B is applied to the device with the foldable screen that features rolling, the folded state in FIG. 9 and FIG. 10A and FIG. 10B is an unexpanded state of the device with the foldable screen that features rolling. In conclusion, the foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

## Claims

1. A volume adjustment method, applied to an electronic device comprising a foldable screen, a first volume button, and a second volume button, wherein a status of the electronic device comprises an unexpanded state and an expanded state, and the method comprises:
receiving a first input of a user on the first volume button;
determining that the electronic device is in the unexpanded state; and
setting the first volume button to a first function and setting the second volume button to a second function in response to the first input, wherein the first function and the second function are different.

2. The method according to claim 1, wherein before setting the first volume button to the first function, the method further comprises:
determining that the electronic device is in a state of playing audio data.

3. The method according to claim 1 or 2, wherein setting the first volume button to the first function and setting the second volume button to the second function in response to the first input, and the method further comprises:
performing the first function.

4. The method according to any one of claims 1 to 3, wherein the method further comprises:
if the electronic device is in the unexpanded state, and a second input on the first volume button is received within preset duration after the first input is received, performing the first function; or
if the electronic device is in the unexpanded state, and a second input on the second volume button is received within preset duration after the first input is received, performing the second function.

5. The method according to any one of claims 1 to 4, wherein the method further comprises:
if the electronic device does not receive a third input on the first volume button or the second volume button within preset duration after the first input is received, setting the first volume button and the second volume button to default functions.

6. The method according to any one of claims 1 to 4, wherein the method further comprises:
if the electronic device switches to the expanded state, setting the first volume button and the second volume button to default functions.

7. The method according to any one of claims 1 to 6, wherein before setting the first volume button to the first function, the method further comprises:
detecting environment information; and
determining the first function based on the environment information.

8. The method according to claim 7, wherein before setting the first volume button to the first function, the method further comprises:
detecting volume of the electronic device; and
determining the first function based on the environment information is specifically:
determining the first function based on the environment information and the volume.

9. The method according to claim 8, wherein the method further comprises:
obtaining volume commonly used by the user; and
determining the first function based on the environment information and the volume specifically comprises:
determining the first function based on the environment information, the volume, and the volume commonly used by the user.

10. The method according to any one of claims 1 to 6, wherein before setting the first volume button to the first function, the method further comprises:
detecting volume of the electronic device;
obtaining volume commonly used by the user; and
determining the first function based on the volume of the electronic device and the volume commonly used by the user.

11. The method according to any one of claims 1 to 6, wherein before setting the first volume button to the first function, the method further comprises:
detecting location information of the electronic device; and
determining the first function based on the location information.

12. The method according to any one of claims 1 to 11, wherein the first function is increasing volume at which the first electronic device plays audio, and the second function is decreasing volume at which the first electronic device plays audio; or the first function is decreasing volume at which the first electronic device plays audio, and the second function is increasing volume at which the first electronic device plays audio.

13. An electronic device, comprising one or more processors and one or more memories, wherein the one or more memories are coupled to the one or more processors, the one or more memories are configured to store computer program code, the computer program code comprises computer instructions, and when the one or more processors execute the computer instructions, the electronic device is enabled to perform the method according to any one of claims 1 to 12.

14. A computer-readable storage medium, comprising instructions, wherein when the instructions are run on an electronic device, the electronic device is enabled to perform the method according to any one of claims 1 to 12.
